# EUROPEAN PATENT SPECIFICATION

(11) **EP 3 629 059 B1**
(45) Date of publication and mention of the grant of the patent: **27.04.2022**
(21) Application number: 19198926.8
(22) Date of filing: 23.09.2019
(51) Int. Cl.: G01S 17/931, G05D 1/00, H04W 4/44, G01S 17/86, G01S 17/89, G05D 1/02, H04W 4/021

(54) **SHARING CLASSIFIED OBJECTS PERCEIVED BY AUTONOMOUS VEHICLES**
GEMEINSAME NUTZUNG VON KLASSIFIZIERTEN, VON AUTONOMEN FAHRZEUGEN WAHRGENOMMENEN OBJEKTEN
PARTAGE D'OBJETS CLASSÉS PERÇUS PAR DES VÉHICULES AUTONOMES

(30) Priority: 27.09.2018 US 201862737844 P; 22.02.2019 DK PA201970114
(43) Date of publication of application: 01.04.2020
(73) Proprietor: Motional AD LLC, Boston, MA 02210 (US)
(72) Inventor: Premawardena, Abhaya, Sunnyvale, CA 94085 (US)
(74) Representative: Conroy, John

(56) References cited:
- US-A1- 2014 063 232
- US-A1- 2017 164 423
- US-A1- 2018 225 975
- US-B1- 9 495 874

## Description

### TECHNICAL FIELD

This description relates generally to automotive navigation systems, and more particularly to autonomous vehicle perception systems that detect and classify objects using onboard sensors.

### BACKGROUND

A digital map is a collection of data compiled and formatted into a virtual image that can be displayed on automotive navigation system displays. The digital map provides drivers with an accurate representation of fixed infrastructure in a particular geographic area, including major road arteries and other points of interest (POI). A primary use of digital maps is with global navigation satellite systems (GNSS), such as the Global Satellite System (GPS) which is commonly used in automotive navigation systems. The fixed infrastructure is typically shown on the digital map as graphical objects annotated with text.

Future vehicles, and in particular autonomous vehicles, include perception subsystems that use sensors (e.g., LiDAR, cameras, radars, sonars) to detect static and dynamic objects in the local operating environment, so that the vehicle can make real-time navigation and control decisions. These object maps (also referred to as object lists) often include dynamic objects that are not found in conventional digital maps, such as other vehicles (parked and moving), temporary impacts to fixed infrastructure (e.g., construction zones, road closures, traffic jams, traffic accidents), pedestrians, bicyclists and any other static or dynamic object.

In the world of autonomous vehicles, vehicular communication systems allow the autonomous vehicles to communicate with each other and with roadside units, providing each other with information, such as safety warnings and traffic information. These systems can be used to transmit object maps using wireless communications technology (e.g., 5G). There are several issues, however, with sharing object maps between autonomous vehicles. Due to the delay inherent in wireless communications systems the object maps may be too "stale" to be useful or safe to use. Also, the object maps may be formatted differently and/or have different degrees of accuracy depending on the sensor technology and perception algorithms used to detect and classify the objects. The sharing of object maps also has legal implications that can create new issues regarding liability and insurance. For example, a shared object map that is inaccurate and/or includes stale data could cause a collision, creating an uncertainty regarding the responsible party. These unresolved liability issues will make it difficult to gain wide acceptance for sharing object maps. Without widespread acceptance, the value of sharing object maps would be greatly diminished. US 9495874 B1 describes a method and apparatus for determining one or more behavior models used by an autonomous vehicle to predict the behavior of detected objects. The autonomous vehicle may collect and record object behavior using one or more sensors. The autonomous vehicle may then communicate the recorded object behavior to a server operative to determine the behavior models. The server may determine the behavior models according to a given object classification, actions of interest performed by the object, and the object's perceived surroundings.

US 2018/225975 A1 describes a vehicle and a control method therefor. The vehicle comprises: at least one sensor for acquiring traveling information of the vehicle and external environment information of the vehicle; and a control unit for receiving traveling information of a first group, wherein the vehicles, which join the first group, are traveling on a road including a plurality of lanes, for determining a target position of the vehicle for the first group on the basis of at least one of the vehicle traveling information, the external environment information, and the traveling information of the first group, and for controlling the vehicle so as to execute at least one operation corresponding to the target position.

US 2014/063232 A1 describes methods and systems for detection of a construction zone sign. A computing device, configured to control the vehicle, may be configured to receive, from an imagecapture device coupled to the computing device, images of a vicinity of the road on which the vehicle is travelling. Also, the computing device may be configured to determine image portions in the images that may depict sides of the road at a predetermined height range. Further, the computing device may be configured to detect a construction zone sign in the image portions, and determine a type of the construction zone sign. Accordingly, the computing device may be configured to modify a control strategy associated with a driving behavior of the vehicle; and control the vehicle based on the modified control strategy.

US 2017/164423 A1 describes an autonomous vehicle tracking and updating system that tracks locations of AVs traveling throughout a given region. Using a stored network resource map, the system identifies a number of network-limited areas in the given region, and determines when respective AVs will enter one of the network-limited areas. In response, the system transmits a set of configuration commands to a number of proximate AVs to establish a mesh network with the respective AVs.

### SUMMARY

The invention is defined in the appended claims. Embodiments are disclosed for sharing classified objects perceived by autonomous vehicles The invention provides a computer-implemented method according to independent claim 1 and a system according to independent claim 15.

According to other advantageous features of the present invention:
- the first edge node, one or more outlier scene descriptions in the plurality of scene descriptions, and excluding the one or more outlier scene descriptions from the updating.
- determining, by the first edge node, whether a timestamp of the first scene description exceeds an age threshold; and in accordance with the timestamp exceeding an age threshold, excluding the first scene description from the updating.
- the timestamp of the first scene description is an oldest object timestamp for an object in the first scene description.
- generating, by the first edge node, a second scene description generated from data provided by one or more non-AV sensors in the first zone; and using, by the first edge node, the first and second scene descriptions in the updating.
- determining, by the first edge node, a confidence score indicating the accuracy of the ASG.
- obtaining, by the first edge node, one or more ASG updates from a cloud based computer platform; and using, by the first edge node, the one or more ASG updates in the updating.
- the updating includes adding or deleting one or more objects to or from the ASG.
- updating includes adding or changing labels for one or more objects of the ASG.
- updating includes updating at least one state of at least one dynamic object in the ASG.

The present invention also proposes one or more non-transitory storage media storing instructions which, when executed by one or more computing devices, cause performance of the method recited in any of the features.

These and other aspects, features, and implementations will become apparent from the following descriptions, including the claims.

### BRIEF DESCRIPTION OF THE DRAWINGS

FIG. 1 shows an example of an autonomous vehicle having autonomous capability.
FIG. 2 illustrates an example "cloud" computing environment.
FIG. 3 illustrates a computer system.
FIG. 4 shows an example architecture for an autonomous vehicle.
FIG. 5 shows an example of inputs and outputs that may be used by a perception module.
FIG. 6 shows an example of a LiDAR system.
FIG. 7 shows the LiDAR system in operation.
FIG. 8 shows the operation of the LiDAR system in additional detail.
FIG. 9 shows a block diagram of the relationships between inputs and outputs of a planning module.
FIG. 10 shows a directed graph used in path planning.
FIG. 11 shows a block diagram of the inputs and outputs of a control module.
FIG. 12 shows a block diagram of the inputs, outputs, and components of a controller.
FIG. 13 shows an example network for sharing classified objects perceived by autonomous vehicles.
FIG. 14 shows a block diagram of an example mobility services platform (MSP) for facilitating shared objects perceived by autonomous vehicles.
FIG. 15 shows a flow diagram of an example process for sharing classified objects perceived by autonomous vehicles.
FIG. 16 shows a flow diagram of an example process performed by an edge node to share classified objects perceived by autonomous vehicles.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

In the drawings, specific arrangements or orderings of schematic elements, such as those representing devices, modules, instruction blocks and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship, or association between or among two or more other schematic elements, the absence of any such connecting elements is not meant to imply that no connection, relationship, or association can exist. In other words, some connections, relationships, or associations between elements are not shown in the drawings so as not to obscure the disclosure. In addition, for ease of illustration, a single connecting element is used to represent multiple connections, relationships or associations between elements. For example, where a connecting element represents a communication of signals, data, or instructions, it should be understood by those skilled in the art that such element represents one or multiple signal paths (e.g., a bus), as may be needed, to affect the communication.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

Several features are described hereafter that can each be used independently of one another or with any combination of other features. However, any individual feature may not address any of the problems discussed above or might only address one of the problems discussed above. Some of the problems discussed above might not be fully addressed by any of the features described herein. Although headings are provided, information related to a particular heading, but not found in the section having that heading, may also be found elsewhere in this description. Embodiments are described herein according to the following outline:
1. General Overview
2. Hardware Overview
3. Autonomous Vehicle Architecture
4. Autonomous Vehicle Inputs
5. Autonomous Vehicle Planning
6. Autonomous Vehicle Control
7. Shared Classified Objects Perceived by Autonomous Vehicles

### General Overview

In some autonomous vehicle operating environments, it may be advantageous for autonomous vehicles to share their respective scene descriptions (e.g., object maps or lists) for particular zones with other autonomous vehicles, so that a common and more accurate scene description can be accessed and used by autonomous vehicles (or autonomous vehicles in the same fleet) that are traveling in the zone, or that plan to travel in the zone in the future.

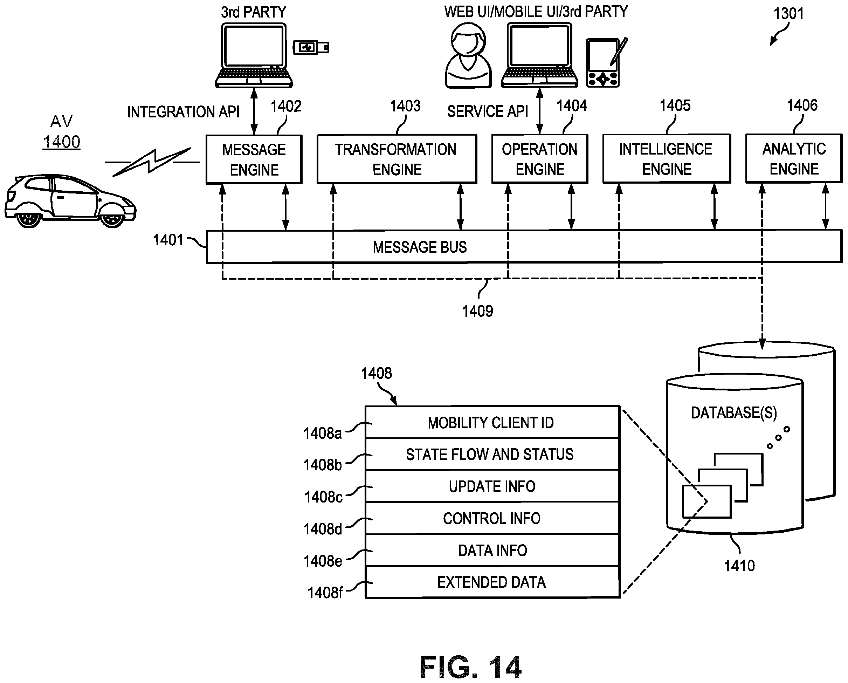

In an embodiment, a virtual grid is overlaid on a geographic area (e.g., a city), dividing the geographic area into one or more zones, wherein each zone comprises one or more cells. The zones can have the same number of cells or different numbers of cells. Cells can be any desired size or shape, such as n x n squares, m x n rectangles, circles with radius r or any other desired polygon. Autonomous vehicles traveling in a zone can upload or transmit their respective sensor-based scene descriptions to a network edge node that is located in or near the zone. The autonomous vehicle scene descriptions can include a timestamp that can be used by the edge node to determine the "staleness" of the scene description, under the presumption the older the scene description the less accurate the scene description. Edge nodes in zones use the scene descriptions to update a common and more accurate scene description for the zone, referred to hereinafter as an autonomous system grid (ASG). The ASG includes the most accurate and up to date scene description for a zone of a geographic area based on one or more of: locally generated scene descriptions provided by autonomous vehicles traveling in the zone, scene descriptions provided by fixed sensors (e.g., cameras) located at edge nodes or other infrastructure in the zones and scene descriptions (e.g., static maps) provided by cloud based resources, such as MSP 1301 described in reference to FIG. 14.

Prior to updating the ASG, each scene description received by an edge node is compared with other scene descriptions received by the edge node from other autonomous vehicles, fixed sensors and cloud based resources to determine outlier scene descriptions. For example, an outlier detection algorithm can be used by one or more processors in the edge node to determine outliers. Other information can also be used to determine outliers. The outlier scene descriptions are discarded and the remaining scene descriptions are used to update the ASG. Updating the ASG includes but is not limited to: adding objects, deleting objects, updating the location of moving objects, updating the speed, velocity, acceleration or heading of the objects and updating labels for the objects to more accurately describe the objects. In an embodiment, the ASG is assigned a confidence score indicating its accuracy, such as a number from 1 to 5, where 5 is highly accurate and 1 means low accuracy.

After the ASG is updated, access to the ASG is made available to autonomous vehicles traveling in the zone or that plan to travel in the zone in the future. The ASG can be stored by one or more edge nodes in a network and broadcast by the one or more edge nodes to autonomous vehicles using any suitable wireless communications technology (e.g., 5G), or using other communication channels, such as cell towers, wireless local area networks (e.g., WiFi) and vehicle-to-vehicle (V2V) communications. The ASG can be compressed using any suitable lossy or lossless compression algorithm and encrypted and digitally signed by the edge server to ensure the ASG is not intentionally or accidentally corrupted. In an embodiment, the ASG is provided to autonomous vehicles in a common or standardized data and/or signaling format that is known to every autonomous vehicle to ensure compatibility across different fleets.

Each autonomous vehicle can compare the ASG to its respective sensor-based scene description to improve the accuracy of its respective scene description. This improvement can include but is not limited to: the inclusion of previously undetected objects into the current scene description generated by the autonomous vehicle, objects that were mislabeled, and corrections to states of dynamic objects, such as corrections to the position, speed, acceleration or heading of an object. Autonomous vehicles can also use the ASG for route planning to avoid traffic situations or temporary environmental impacts (e.g., construction zones, road closures, traffic jams, traffic accidents).

In an embodiment, the edge nodes are managed and controlled by a trusted centralized entity, such as the MSP described in reference to FIG. 14. The MSP communicates over a secure link with each edge node and can send software updates and other information to the edge nodes, such as algorithm updates, encryption data (e.g. encryption keys), security information (e.g., black lists). In an embodiment, the edge nodes in a zone can be connected in a ring (hereinafter, referred to as "zone ring") using high speed data links that allow the edge nodes to communicate and share data with each other, and with edge nodes in other zones. In an embodiment, the edge nodes are connected in a dual-ring, self-healing topology to ensure data flow in the event a link between edge nodes in the ring fails.

### Hardware Overview

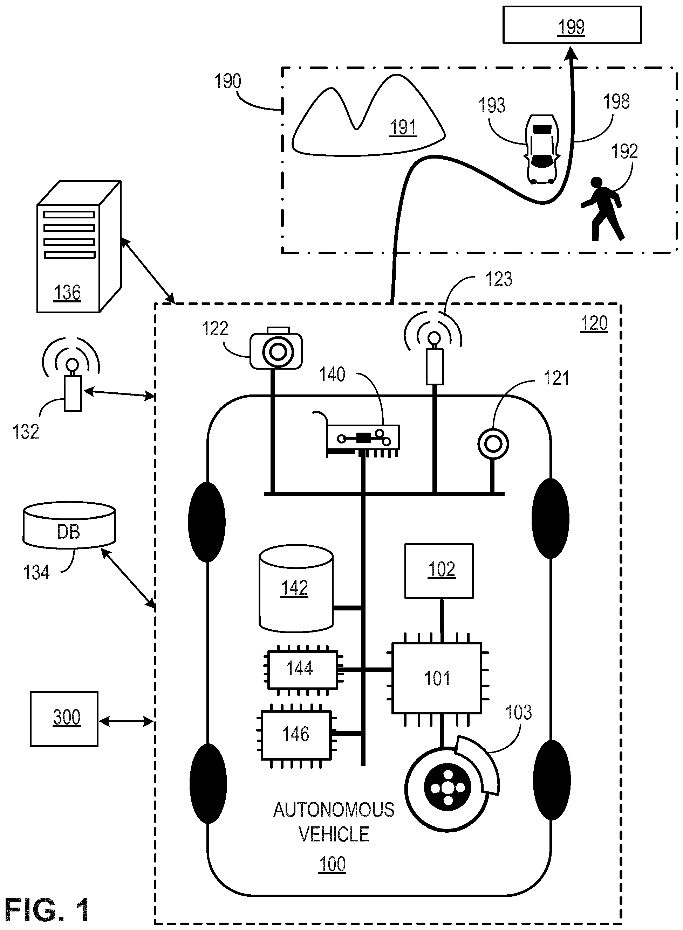

FIG. 1 shows an example of an autonomous vehicle 100 having autonomous capability.

As used herein, the term "autonomous capability" refers to a function, feature, or facility that enables a vehicle to be partially or fully operated without real-time human intervention, including without limitation fully autonomous vehicles, highly autonomous vehicles, and conditionally autonomous vehicles.

As used herein, an autonomous vehicle (AV) is a vehicle that possesses autonomous capability.

As used herein, "vehicle" includes means of transportation of goods or people. For example, cars, buses, trains, airplanes, drones, trucks, boats, ships, submersibles, dirigibles, etc. A driverless car is an example of a vehicle.

As used herein, "trajectory" refers to a path or route to navigate an AV from a first spatiotemporal location to second spatiotemporal location. In an embodiment, the first spatiotemporal location is referred to as the initial or starting location and the second spatiotemporal location is referred to as the destination, final location, goal, goal position, or goal location. In some examples, a trajectory is made up of one or more segments (e.g., sections of road) and each segment is made up of one or more blocks (e.g., portions of a lane or intersection). In an embodiment, the spatiotemporal locations correspond to real world locations. For example, the spatiotemporal locations are pick up or drop-off locations to pick up or drop-off persons or goods.

As used herein, "sensor(s)" includes one or more hardware components that detect information about the environment surrounding the sensor. Some of the hardware components can include sensing components (e.g., image sensors, biometric sensors), transmitting and/or receiving components (e.g., laser or radio frequency wave transmitters and receivers), electronic components such as analog-to-digital converters, a data storage device (such as a RAM and/or a nonvolatile storage), software or firmware components and data processing components such as an ASIC (application-specific integrated circuit), a microprocessor and/or a microcontroller.

As used herein, a "scene description" is a data structure (e.g., map, list) or data stream that includes one or more classified or labeled objects detected by one or more sensors on the AV vehicle or provided by a source external to the AV.

As used herein, a "road" is a physical area that can be traversed by a vehicle, and may correspond to a named thoroughfare (e.g., city street, interstate freeway, etc.) or may correspond to an unnamed thoroughfare (e.g., a driveway in a house or office building, a section of a parking lot, a section of a vacant lot, a dirt path in a rural area, etc.). Because some vehicles (e.g., 4-wheel-drive pickup trucks, sport utility vehicles, etc.) are capable of traversing a variety of physical areas not specifically adapted for vehicle travel, a "road" may be a physical area not formally defined as a thoroughfare by any municipality or other governmental or administrative body.

As used herein, a "lane" is a portion of a road that can be traversed by a vehicle, and may correspond to most or all of the space between lane markings, or may correspond to only some (e.g., less than 50%) of the space between lane markings. For example, a road having lane markings spaced far apart might accommodate two or more vehicles between the markings, such that one vehicle can pass the other without traversing the lane markings, and thus could be interpreted as having a lane narrower than the space between the lane markings, or having two lanes between the lane markings. A lane could also be interpreted in the absence of lane markings. For example, a lane may be defined based on physical features of an environment, e.g., rocks and trees along a thoroughfare in a rural area.

As used herein, an "edge node" is one or more computers coupled to a network that provide a portal for communication with AVs and can communicate with other edge nodes and a cloud based computing platform.

As used herein, an "edge device" is a device that implements an edge node and provides a physical access point (AP) into enterprise or service provider (e.g., Verizon^{®}, AT&T^{®}) core networks. Examples of edge devices include but are not limited to: routers, routing switches, integrated access devices (IADs), multiplexers, metropolitan area network (MAN) and wide area network (WAN) access devices.

"One or more" includes a function being performed by one element, a function being performed by more than one element, *e.g*., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this description, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

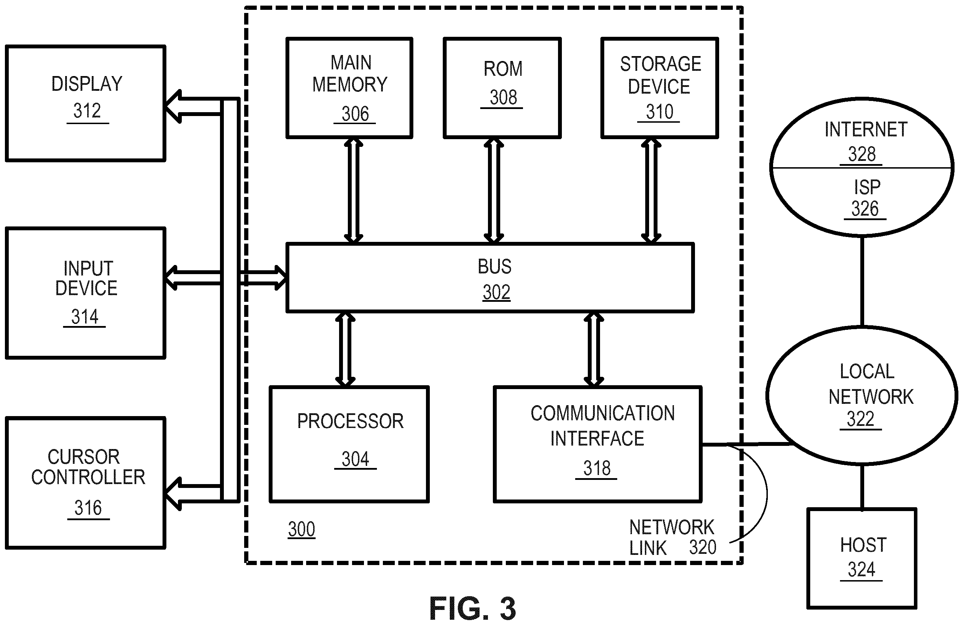

As used herein, an AV system refers to the AV along with the array of hardware, software, stored data, and data generated in real-time that supports the operation of the AV. In an embodiment, the AV system is incorporated within the AV. In an embodiment, the AV system is spread across several locations. For example, some of the software of the AV system is implemented on a cloud computing environment similar to cloud computing environment 300 described below with respect to FIG. 3.

In general, this document describes technologies applicable to any vehicles that have one or more autonomous capabilities including fully autonomous vehicles, highly autonomous vehicles, and conditionally autonomous vehicles, such as so-called Level 5, Level 4 and Level 3 vehicles, respectively (see SAE International's standard J3016: Taxonomy and Definitions for Terms Related to On-Road Motor Vehicle Automated Driving Systems, which is incorporated by reference in its entirety, for more details on the classification of levels of autonomy in vehicles). The technologies described in this document are also applicable to partially autonomous vehicles and driver assisted vehicles, such as so-called Level 2 and Level 1 vehicles (see SAE International's standard J3016: Taxonomy and Definitions for Terms Related to On-Road Motor Vehicle Automated Driving Systems). In an embodiment, one or more of the Level 1, 2, 3, 4 and 5 vehicle systems may automate certain vehicle operations (e.g., steering, braking, and using maps) under certain operating conditions based on processing of sensor inputs. The technologies described in this document can benefit vehicles in any levels, ranging from fully autonomous vehicles to human-operated vehicles.

Referring to FIG. 1, an AV system 120 operates the AV 100 along a trajectory 198 through an environment 190 to a destination 199 (sometimes referred to as a final location) while avoiding objects (e.g., natural obstructions 191, vehicles 193, pedestrians 192, cyclists, and other obstacles) and obeying rules of the road (e.g., rules of operation or driving preferences).

In an embodiment, the AV system 120 includes devices 101 that are instrumented to receive and act on operational commands from the computer processors 146. In an embodiment, computing processors 146 are similar to the processor 304 described below in reference to FIG. 3. Examples of devices 101 include a steering control 102, brakes 103, gears, accelerator pedal or other acceleration control mechanisms, windshield wipers, side-door locks, window controls, and turn-indicators.

In an embodiment, the AV system 120 includes sensors 121 for measuring or inferring properties of state or condition of the AV 100, such as the AV's position, linear and angular velocity and acceleration, and heading (e.g., an orientation of the leading end of AV 100). Example of sensors 121 are a Global Navigation Satellite System (GNSS) receiver, inertial measurement units (IMU) that measure both vehicle linear accelerations and angular rates, wheel speed sensors for measuring or estimating wheel slip ratios, wheel brake pressure or braking torque sensors, engine torque or wheel torque sensors, and steering angle and angular rate sensors.

In an embodiment, the sensors 121 also include sensors for sensing or measuring properties of the AV's environment. For example, monocular or stereo video cameras 122 in the visible light, infrared or thermal (or both) spectra, LiDAR 123, RADAR, ultrasonic sensors, time-of-flight (TOF) depth sensors, speed sensors, temperature sensors, humidity sensors, and precipitation sensors.

In an embodiment, the AV system 120 includes a data storage unit 142 and memory 144 for storing machine instructions associated with computer processors 146 or data collected by sensors 121. In an embodiment, the data storage unit 142 is similar to the ROM 308 or storage device 310 described below in relation to FIG. 3. In an embodiment, memory 144 is similar to the main memory 306 described below. In an embodiment, the data storage unit 142 and memory 144 store historical, real-time, and/or predictive information about the environment 190. In an embodiment, the stored information includes maps, driving performance, traffic congestion updates or weather conditions. In an embodiment, data relating to the environment 190 is transmitted to the AV 100 via a communications channel from a remotely located database 134.

In an embodiment, the AV system 120 includes communications devices 140 for communicating measured or inferred properties of other vehicles' states and conditions, such as positions, linear and angular velocities, linear and angular accelerations, and linear and angular headings to the AV 100. These devices include Vehicle-to-Vehicle (V2V) and Vehicle-to-Infrastructure (V2I) communication devices and devices for wireless communications over point-to-point or ad hoc networks or both. In an embodiment, the communications devices 140 communicate across the electromagnetic spectrum (including radio and optical communications) or other media (e.g., air and acoustic media). A combination of V2V and V2I communication (and, in some embodiments, one or more other types of communication) is sometimes referred to as Vehicle-to-Everything (V2X) communication. V2X communication typically conforms to one or more communications standards for communication with, between, and among AVs.

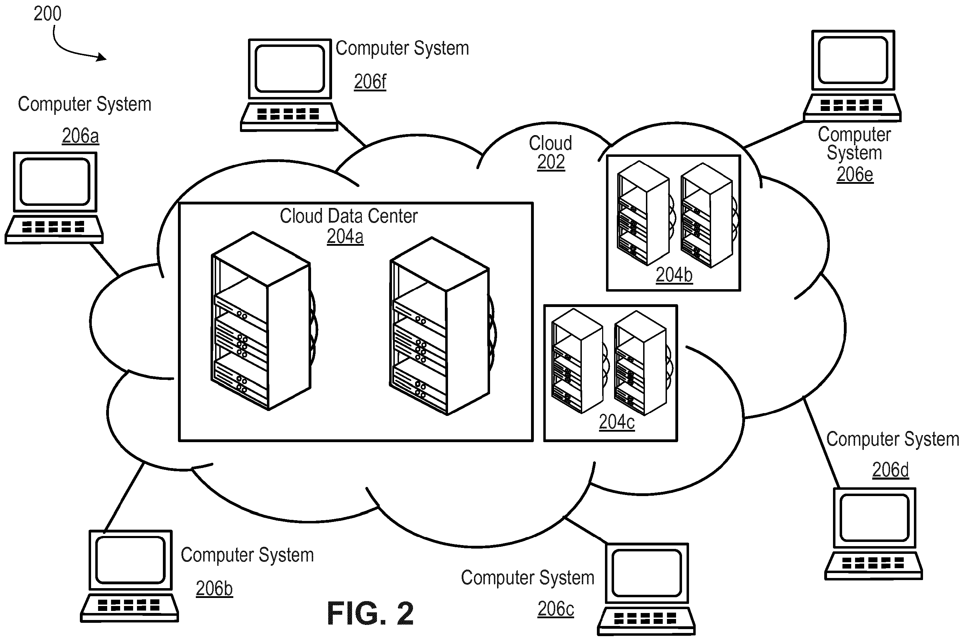

In an embodiment, the communication devices 140 include communication interfaces. For example, wired, wireless, WiMAX, Wi-Fi, Bluetooth, satellite, cellular, optical, near field, infrared, or radio interfaces. The communication interfaces transmit data from a remotely located database 134 to AV system 120. In an embodiment, the remotely located database 134 is embedded in a cloud computing environment 200 as described in FIG. 2. The communication interfaces 140 transmit data collected from sensors 121 or other data related to the operation of AV 100 to the remotely located database 134. In an embodiment, communication interfaces 140 transmit information that relates to teleoperations to the AV 100. In some embodiments, the AV 100 communicates with other remote (e.g., "cloud") servers 136.

In an embodiment, the remotely located database 134 also stores and transmits digital data (e.g., storing data such as road and street locations). Such data is stored on the memory 144 on the AV 100, or transmitted to the AV 100 via a communications channel from the remotely located database 134.

In an embodiment, the remotely located database 134 stores and transmits historical information about driving properties (e.g., speed and acceleration profiles) of vehicles that have previously traveled along trajectory 198 at similar times of day. In one implementation, such data may be stored on the memory 144 on the AV 100, or transmitted to the AV 100 via a communications channel from the remotely located database 134.

Computing devices 146 located on the AV 100 algorithmically generate control actions based on both real-time sensor data and prior information, allowing the AV system 120 to execute its autonomous driving capabilities.

In an embodiment, the AV system 120 includes computer peripherals 132 coupled to computing devices 146 for providing information and alerts to, and receiving input from, a user (e.g., an occupant or a remote user) of the AV 100. In an embodiment, peripherals 132 are similar to the display 312, input device 314, and cursor controller 316 discussed below in reference to FIG. 3. The coupling is wireless or wired. Any two or more of the interface devices may be integrated into a single device.

FIG. 2 illustrates an example "cloud" computing environment. Cloud computing is a model of service delivery for enabling convenient, on-demand network access to a shared pool of configurable computing resources (e.g. networks, network bandwidth, servers, processing, memory, storage, applications, virtual machines, and services). In typical cloud computing systems, one or more large cloud data centers house the machines used to deliver the services provided by the cloud. Referring now to FIG. 2, the cloud computing environment 200 includes cloud data centers 204a, 204b, and 204c that are interconnected through the cloud 202. Data centers 204a, 204b, and 204c provide cloud computing services to computer systems 206a, 206b, 206c, 206d, 206e, and 206f connected to cloud 202.

The cloud computing environment 200 includes one or more cloud data centers. In general, a cloud data center, for example the cloud data center 204a shown in FIG. 2, refers to the physical arrangement of servers that make up a cloud, for example the cloud 202 shown in FIG. 2, or a particular portion of a cloud. For example, servers are physically arranged in the cloud datacenter into rooms, groups, rows, and racks. A cloud datacenter has one or more zones, which include one or more rooms of servers. Each room has one or more rows of servers, and each row includes one or more racks. Each rack includes one or more individual server nodes. In some implementation, servers in zones, rooms, racks, and/or rows are arranged into groups based on physical infrastructure requirements of the datacenter facility, which include power, energy, thermal, heat, and/or other requirements. In an embodiment, the server nodes are similar to the computer system described in FIG. 3. The data center 204a has many computing systems distributed through many racks.

The cloud 202 includes cloud data centers 204a, 204b, and 204c along with the network and networking resources (for example, networking equipment, nodes, routers, switches, and networking cables) that interconnect the cloud data centers 204a, 204b, and 204c and help facilitate the computing systems' 206a-f access to cloud computing services. In an embodiment, the network represents any combination of one or more local networks, wide area networks, or internetworks coupled using wired or wireless links deployed using terrestrial or satellite connections. Data exchanged over the network, is transferred using any number of network layer protocols, such as Internet Protocol (IP), Multiprotocol Label Switching (MPLS), Asynchronous Transfer Mode (ATM), Frame Relay, etc. Furthermore, in embodiments where the network represents a combination of multiple sub-networks, different network layer protocols are used at each of the underlying sub-networks. In some embodiments, the network represents one or more interconnected internetworks, such as the public Internet.

The computing systems 206a-f or cloud computing services consumers are connected to the cloud 202 through network links and network adapters. In an embodiment, the computing systems 206a-f are implemented as various computing devices, for example servers, desktops, laptops, tablet, smartphones, Internet of Things (IoT) devices, autonomous vehicles (including, cars, drones, shuttles, trains, buses, etc.) and consumer electronics. In an embodiment, the computing systems 206a-f are implemented in or as a part of other systems.

In an embodiment, cloud computing environment 200 can include mobility services platform (MSP) 1301, as described more fully in reference to FIG. 14.

FIG. 3 illustrates a computer system 300. In an implementation, the computer system 300 is a special purpose computing device. The special-purpose computing device is hard-wired to perform the techniques or includes digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. In various embodiments, the special-purpose computing devices are desktop computer systems, portable computer systems, handheld devices, network devices or any other device that incorporates hard-wired and/or program logic to implement the techniques.

In an embodiment, the computer system 300 includes a bus 302 or other communication mechanism for communicating information, and a hardware processor 304 coupled with a bus 302 for processing information. The hardware processor 304 is, for example, a general-purpose microprocessor. The computer system 300 also includes a main memory 306, such as a random-access memory (RAM) or other dynamic storage device, coupled to the bus 302 for storing information and instructions to be executed by processor 304. In one implementation, the main memory 306 is used for storing temporary variables or other intermediate information during execution of instructions to be executed by the processor 304. Such instructions, when stored in non-transitory storage media accessible to the processor 304, render the computer system 300 into a special-purpose machine that is customized to perform the operations specified in the instructions.

In an embodiment, the computer system 300 further includes a read only memory (ROM) 308 or other static storage device coupled to the bus 302 for storing static information and instructions for the processor 304. A storage device 310, such as a magnetic disk, optical disk, solid-state drive, or three-dimensional cross point memory is provided and coupled to the bus 302 for storing information and instructions.

In an embodiment, the computer system 300 is coupled via the bus 302 to a display 312, such as a cathode ray tube (CRT), a liquid crystal display (LCD), plasma display, light emitting diode (LED) display, or an organic light emitting diode (OLED) display for displaying information to a computer user. An input device 314, including alphanumeric and other keys, is coupled to bus 302 for communicating information and command selections to the processor 304. Another type of user input device is a cursor controller 316, such as a mouse, a trackball, a touch-enabled display, or cursor direction keys for communicating direction information and command selections to the processor 304 and for controlling cursor movement on the display 312. This input device typically has two degrees of freedom in two axes, a first axis (e.g., x-axis) and a second axis (e.g., y-axis), that allows the device to specify positions in a plane.

According to one embodiment, the techniques herein are performed by the computer system 300 in response to the processor 304 executing one or more sequences of one or more instructions contained in the main memory 306. Such instructions are read into the main memory 306 from another storage medium, such as the storage device 310. Execution of the sequences of instructions contained in the main memory 306 causes the processor 304 to perform the process steps described herein. In alternative embodiments, hard-wired circuitry is used in place of or in combination with software instructions.

The term "storage media" as used herein refers to any non-transitory media that store data and/or instructions that cause a machine to operate in a specific fashion. Such storage media includes non-volatile media and/or volatile media. Non-volatile media includes, for example, optical disks, magnetic disks, solid-state drives, or three-dimensional cross point memory, such as the storage device 310. Volatile media includes dynamic memory, such as the main memory 306. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NV-RAM, or any other memory chip or cartridge.

Storage media is distinct from but may be used in conjunction with transmission media. Transmission media participates in transferring information between storage media. For example, transmission media includes coaxial cables, copper wire and fiber optics, including the wires that comprise the bus 302. Transmission media can also take the form of acoustic or light waves, such as those generated during radio-wave and infrared data communications.

In an embodiment, various forms of media are involved in carrying one or more sequences of one or more instructions to the processor 304 for execution. For example, the instructions are initially carried on a magnetic disk or solid-state drive of a remote computer. The remote computer loads the instructions into its dynamic memory and send the instructions over a telephone line using a modem. A modem local to the computer system 300 receives the data on the telephone line and use an infrared transmitter to convert the data to an infrared signal. An infrared detector receives the data carried in the infrared signal and appropriate circuitry places the data on the bus 302. The bus 302 carries the data to the main memory 306, from which processor 304 retrieves and executes the instructions. The instructions received by the main memory 306 may optionally be stored on the storage device 310 either before or after execution by processor 304.

The computer system 300 also includes a communication interface 318 coupled to the bus 302. The communication interface 318 provides a two-way data communication coupling to a network link 320 that is connected to a local network 322. For example, the communication interface 318 is an integrated service digital network (ISDN) card, cable modem, satellite modem, or a modem to provide a data communication connection to a corresponding type of telephone line. As another example, the communication interface 318 is a local area network (LAN) card to provide a data communication connection to a compatible LAN. In some implementations, wireless links are also implemented. In any such implementation, the communication interface 318 sends and receives electrical, electromagnetic, or optical signals that carry digital data streams representing various types of information.

The network link 320 typically provides data communication through one or more networks to other data devices. For example, the network link 320 provides a connection through the local network 322 to a host computer 324 or to a cloud data center or equipment operated by an Internet Service Provider (ISP) 326. The ISP 326 in turn provides data communication services through the world-wide packet data communication network now commonly referred to as the "Internet" 328. The local network 322 and Internet 328 both use electrical, electromagnetic or optical signals that carry digital data streams. The signals through the various networks and the signals on the network link 320 and through the communication interface 318, which carry the digital data to and from the computer system 300, are example forms of transmission media. In an embodiment, the network 320 contains the cloud 202 or a part of the cloud 202 described above.

The computer system 300 sends messages and receives data, including program code, through the network(s), the network link 320, and the communication interface 318. In an embodiment, the computer system 300 receives code for processing. The received code is executed by the processor 304 as it is received, and/or stored in storage device 310, or other nonvolatile storage for later execution.

### Autonomous Vehicle Architecture

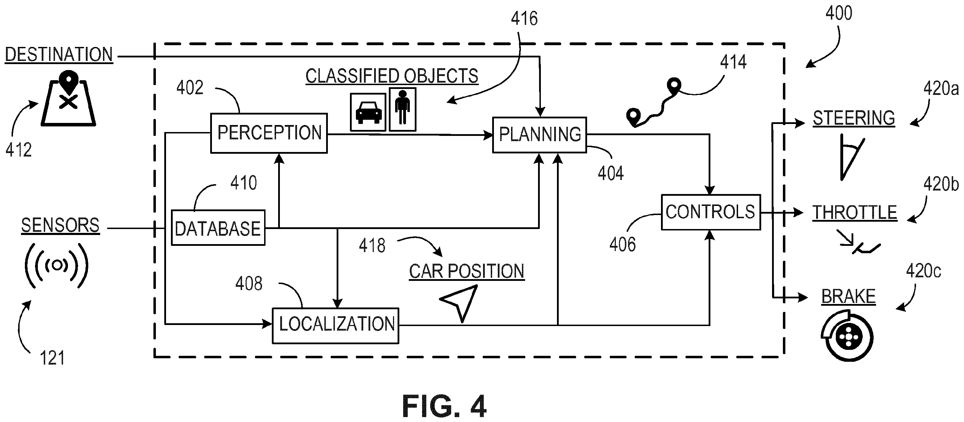

FIG. 4 shows an example architecture 400 for an autonomous vehicle (e.g., the AV 100 shown in FIG. 1). The architecture 400 includes a perception module 402 (sometimes referred to as a perception circuit), a planning module 404 (sometimes referred to as a planning circuit), a control module 406 (sometimes referred to as a control circuit), a localization module 408 (sometimes referred to as a localization circuit), and a database module 410 (sometimes referred to as a database circuit). Each module plays a role in the operation of the AV 100. Together, the modules 402, 404, 406, 408, and 410 may be part of the AV system 120 shown in FIG. 1. In some embodiments, any of the modules 402, 404, 406, 408, and 410 is a combination of computer software (e.g., executable code stored on a computer-readable medium) and computer hardware (e.g., one or more microprocessors, microcontrollers, application-specific integrated circuits [ASICs]), hardware memory devices, other types of integrated circuits, other types of computer hardware, or a combination of any or all of these things).

In use, the planning module 404 receives data representing a destination 412 and determines data representing a trajectory 414 (sometimes referred to as a route) that can be traveled by the AV 100 to reach (e.g., arrive at) the destination 412. In order for the planning module 404 to determine the data representing the trajectory 414, the planning module 404 receives data from the perception module 402, the localization module 408, and the database module 410.

The perception module 402 identifies nearby physical objects using one or more sensors 121, e.g., as also shown in FIG. 1. The objects are classified (e.g., grouped into types such as pedestrian, bicycle, automobile, traffic sign, etc.) and a scene description including the classified objects 416 is provided to the planning module 404.

The planning module 404 also receives data representing the AV position 418 from the localization module 408. The localization module 408 determines the AV position by using data from the sensors 121 and data from the database module 410 (e.g., a geographic data) to calculate a position. For example, the localization module 408 uses data from a GNSS (Global Navigation Satellite System) sensor and geographic data to calculate a longitude and latitude of the AV. In an embodiment, data used by the localization module 408 includes high-precision maps of the roadway geometric properties, maps describing road network connectivity properties, maps describing roadway physical properties (such as traffic speed, traffic volume, the number of vehicular and cyclist traffic lanes, lane width, lane traffic directions, or lane marker types and locations, or combinations of them), and maps describing the spatial locations of road features such as crosswalks, traffic signs or other travel signals of various types.

The control module 406 receives the data representing the trajectory 414 and the data representing the AV position 418 and operates the control functions 420a-c (e.g., steering, throttling, braking, ignition) of the AV in a manner that will cause the AV 100 to travel the trajectory 414 to the destination 412. For example, if the trajectory 414 includes a left turn, the control module 406 will operate the control functions 420a-c in a manner such that the steering angle of the steering function will cause the AV 100 to turn left and the throttling and braking will cause the AV 100 to pause and wait for passing pedestrians or vehicles before the turn is made.

### Autonomous Vehicle Inputs

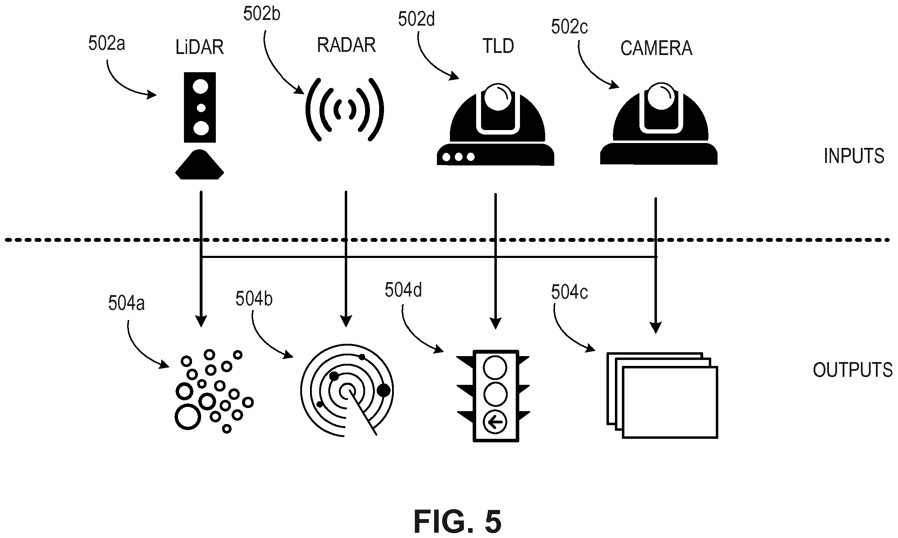

FIG. 5 shows an example of inputs 502a-d (e.g., sensors 121 shown in FIG. 1) and outputs 504a-d (e.g., sensor data) that is used by the perception module 402 (FIG. 4). One input 502a is a LiDAR (Light Detection and Ranging) system (e.g., LiDAR 123 shown in FIG. 1). LiDAR is a technology that uses light (e.g., bursts of light such as infrared light) to obtain data about physical objects in its line of sight. A LiDAR system produces LiDAR data as output 504a. For example, LiDAR data is collections of 3D or 2D points (also known as a point clouds) that are used to construct a representation of the environment 190.

Another input 502b is a RADAR system. RADAR is a technology that uses radio waves to obtain data about nearby physical objects. RADARs can obtain data about objects not within the line of sight of a LiDAR system. A RADAR system 502b produces RADAR data as output 504b. For example, RADAR data are one or more radio frequency electromagnetic signals that are used to construct a representation of the environment 190.

Another input 502c is a camera system. A camera system uses one or more cameras (e.g., digital cameras using a light sensor such as a charge-coupled device [CCD]) to obtain information about nearby physical objects. A camera system produces camera data as output 504c. Camera data often takes the form of image data (e.g., data in an image data format such as RAW, JPEG, PNG, etc.). In some examples, the camera system has multiple independent cameras, e.g., for the purpose of stereopsis (stereo vision), which enables the camera system to perceive depth. Although the objects perceived by the camera system are described here as "nearby," this is relative to the AV. In use, the camera system may be configured to "see" objects far, e.g., up to a kilometer or more ahead of the AV. Accordingly, the camera system may have features such as sensors and lenses that are optimized for perceiving objects that are far away.

Another input 502d is a traffic light detection (TLD) system. A TLD system uses one or more cameras to obtain information about traffic lights, street signs, and other physical objects that provide visual navigation information. A TLD system produces TLD data as output 504d. TLD data often takes the form of image data (e.g., data in an image data format such as RAW, JPEG, PNG, etc.). A TLD system differs from a system incorporating a camera in that a TLD system uses a camera with a wide field of view (e.g., using a wide-angle lens or a fish-eye lens) in order to obtain information about as many physical objects providing visual navigation information as possible, so that the AV 100 has access to all relevant navigation information provided by these objects. For example, the viewing angle of the TLD system may be about 120 degrees or more.

In some embodiments, outputs 504a-d are combined using a sensor fusion technique. Thus, either the individual outputs 504a-d are provided to other systems of the AV 100 (e.g., provided to a planning module 404 as shown in FIG. 4), or the combined output can be provided to the other systems, either in the form of a single combined output or multiple combined outputs of the same type (e.g., using the same combination technique or combining the same outputs or both) or different types type (e.g., using different respective combination techniques or combining different respective outputs or both). In some embodiments, an early fusion technique is used. An early fusion technique is characterized by combining outputs before one or more data processing steps are applied to the combined output. In some embodiments, a late fusion technique is used. A late fusion technique is characterized by combining outputs after one or more data processing steps are applied to the individual outputs.

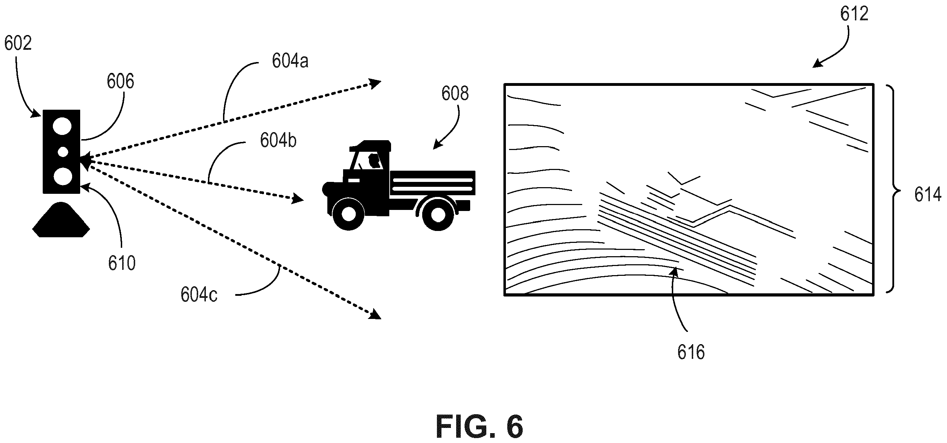

FIG. 6 shows an example of a LiDAR system 602 (e.g., the input 502a shown in FIG. 5). The LiDAR system 602 emits light 604a-c from a light emitter 606 (e.g., a laser transmitter). Light emitted by a LiDAR system is typically not in the visible spectrum; for example, infrared light is often used. Some of the light 604b emitted encounters a physical object 608 (e.g., a vehicle) and reflects back to the LiDAR system 602. (Light emitted from a LiDAR system typically does not penetrate physical objects, e.g., physical objects in solid form.) The LiDAR system 602 also has one or more light detectors 610, which detect the reflected light. In an embodiment, one or more data processing systems associated with the LiDAR system generates an image 612 representing the field of view 614 of the LiDAR system. The image 612 includes information that represents the boundaries 616 of a physical object 608. In this way, the image 612 is used to determine the boundaries 616 of one or more physical objects near an AV.

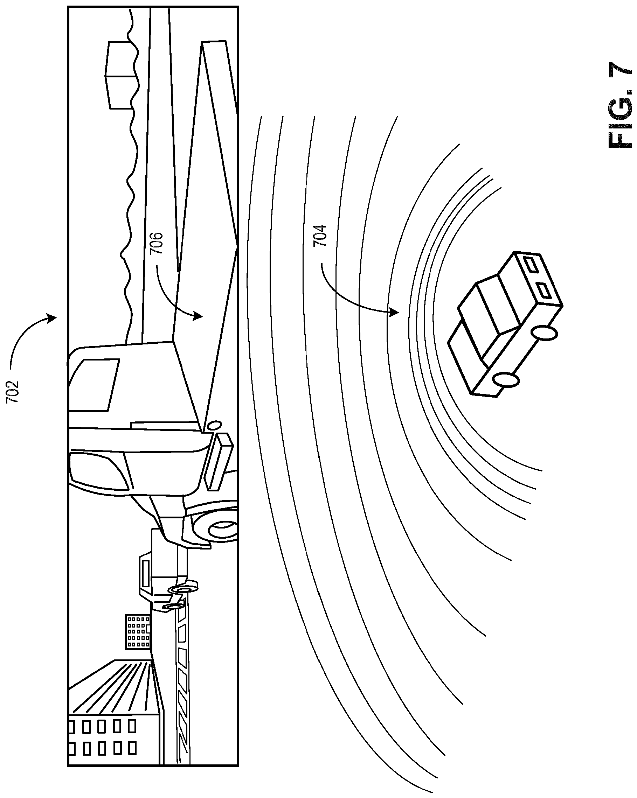

FIG. 7 shows the LiDAR system 602 in operation. In the scenario shown in this figure, the AV 100 receives both camera system output 504c in the form of an image 702 and LiDAR system output 504a in the form of LiDAR data points 704. In use, the data processing systems of the AV 100 compares the image 702 to the data points 704. In particular, a physical object 706 identified in the image 702 is also identified among the data points 704. In this way, the AV 100 perceives the boundaries of the physical object based on the contour and density of the data points 704.

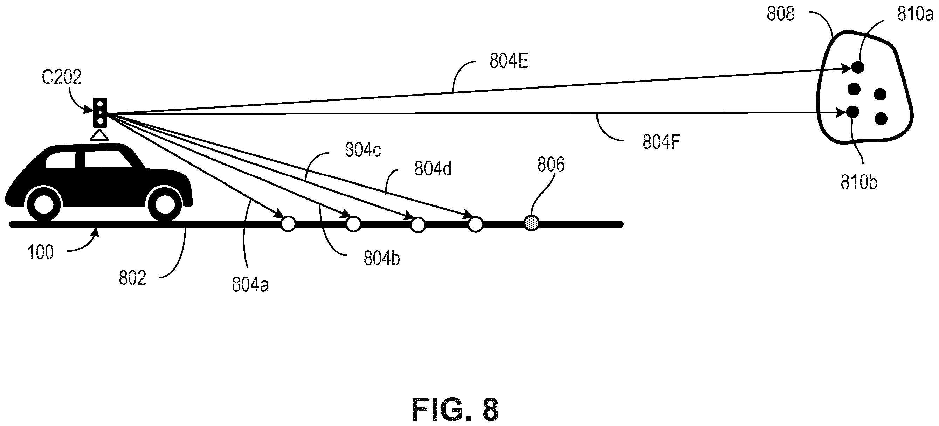

FIG. 8 shows the operation of the LiDAR system 602 in additional detail. As described above, the AV 100 detects the boundary of a physical object based on characteristics of the data points detected by the LiDAR system 602. As shown in FIG. 8, a flat object, such as the ground 802, will reflect light 804a-d emitted from a LiDAR system 602 in a consistent manner. Put another way, because the LiDAR system 602 emits light using consistent spacing, the ground 802 will reflect light back to the LiDAR system 602 with the same consistent spacing. As the AV 100 travels over the ground 802, the LiDAR system 602 will continue to detect light reflected by the next valid ground point 806 if nothing is obstructing the road. However, if an object 808 obstructs the road, light 804e-f emitted by the LiDAR system 602 will be reflected from points 810a-b in a manner inconsistent with the expected consistent manner. From this information, the AV 100 can determine that the object 808 is present.

### Path Planning

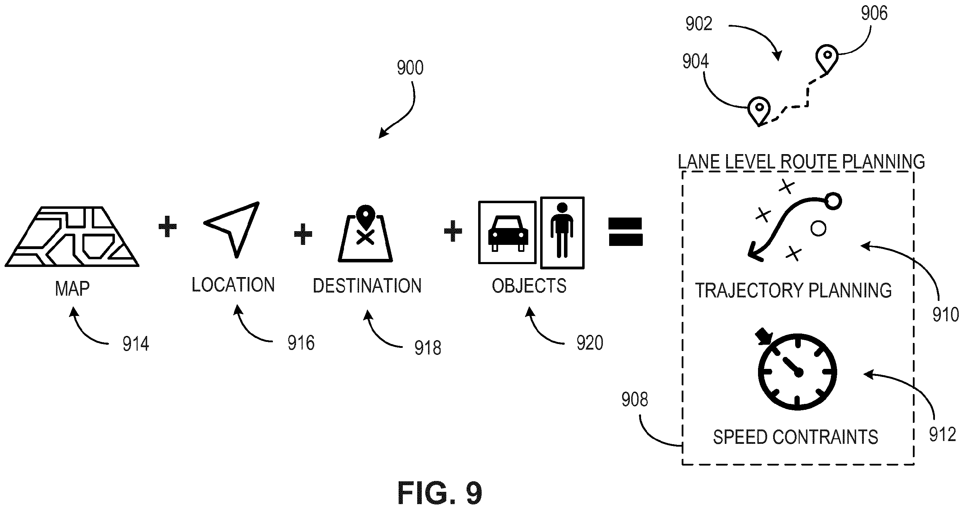

FIG. 9 shows a block diagram 900 of the relationships between inputs and outputs of a planning module 404 (e.g., as shown in FIG. 4). In general, the output of a planning module 404 is a route 902 from a start point 904 (e.g., source location or initial location), and an end point 906 (e.g., destination or final location). The route 902 is typically defined by one or more segments. For example, a segment is a distance to be traveled over at least a portion of a street, road, highway, driveway, or other physical area appropriate for automobile travel. In some examples, e.g., if the AV 100 is an off-road capable vehicle such as a four-wheel-drive (4WD) or all-wheel-drive (AWD) car, SUV, pick-up truck, or the like, the route 902 includes "off-road" segments such as unpaved paths or open fields.

In addition to the route 902, a planning module also outputs lane-level route planning data 908. The lane-level route planning data 908 is used to traverse segments of the route 902 based on conditions of the segment at a particular time. For example, if the route 902 includes a multi-lane highway, the lane-level route planning data 908 includes trajectory planning data 910 that the AV 100 can use to choose a lane among the multiple lanes, e.g., based on whether an exit is approaching, whether one or more of the lanes have other vehicles, or other factors that vary over the course of a few minutes or less. Similarly, in some implementations, the lane-level route planning data 908 includes speed constraints 912 specific to a segment of the route 902. For example, if the segment includes pedestrians or un-expected traffic, the speed constraints 912 may limit the AV 100 to a travel speed slower than an expected speed, e.g., a speed based on speed limit data for the segment.

In an embodiment, the inputs to the planning module 404 includes database data 914 (e.g., from the database module 410 shown in FIG. 4), current location data 916 (e.g., the AV position 418 shown in FIG. 4), destination data 918 (e.g., for the destination 412 shown in FIG. 4), and object data 920 (e.g., the scene description that includes classified objects 416 as perceived by the perception module 402 as shown in FIG. 4). In some embodiments, the database data 914 includes rules used in planning. Rules are specified using a formal language, e.g., using Boolean logic. In any given situation encountered by the AV 100, at least some of the rules will apply to the situation. A rule applies to a given situation if the rule has conditions that are met based on information available to the AV 100, e.g., information about the surrounding environment. Rules can have priority. For example, a rule that says, "if the road is a freeway, move to the leftmost lane" can have a lower priority than "if the exit is approaching within a mile, move to the rightmost lane."

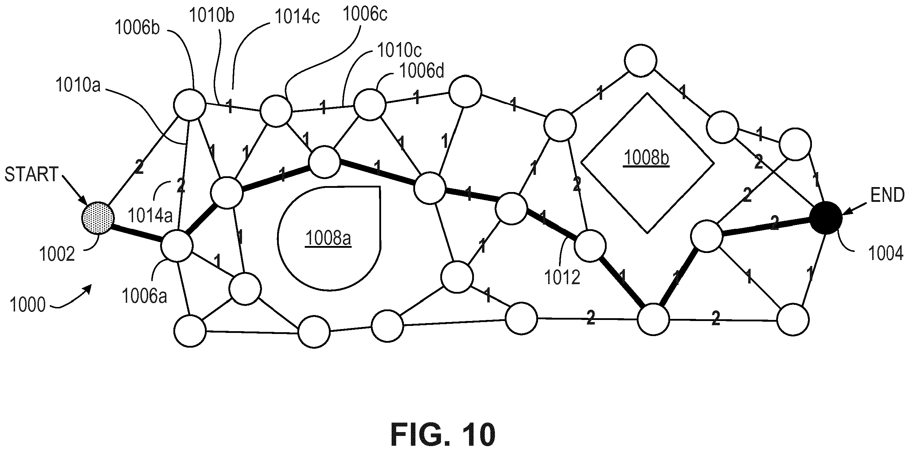

FIG. 10 shows a directed graph 1000 used in path planning, e.g., by the planning module 404 (FIG. 4). In general, a directed graph 1000 like the one shown in FIG. 10 is used to determine a path between any start point 1002 and end point 1004. In real-world terms, the distance separating the start point 1002 and end point 1004 may be relatively large (e.g, in two different metropolitan areas) or may be relatively small (e.g., two intersections abutting a city block or two lanes of a multi-lane road).

In an embodiment, the directed graph 1000 has nodes 1006a-d representing different locations between the start point 1002 and the end point 1004 that could be occupied by an AV 100. In some examples, e.g., when the start point 1002 and end point 1004 represent different metropolitan areas, the nodes 1006a-d represent segments of roads. In some examples, e.g., when the start point 1002 and the end point 1004 represent different locations on the same road, the nodes 1006a-d represent different positions on that road. In this way, the directed graph 1000 includes information at varying levels of granularity. In an embodiment, a directed graph having high granularity is also a subgraph of another directed graph having a larger scale. For example, a directed graph in which the start point 1002 and the end point 1004 are far away (e.g., many miles apart) has most of its information at a low granularity and is based on stored data, but also includes some high granularity information for the portion of the graph that represents physical locations in the field of view of the AV 100.

The nodes 1006a-d are distinct from objects 1008a-b which cannot overlap with a node. In an embodiment, when granularity is low, the objects 1008a-b represent regions that cannot be traversed by automobile, e.g., areas that have no streets or roads. When granularity is high, the objects 1008a-b represent physical objects in the field of view of the AV 100, e.g., other automobiles, pedestrians, or other entities with which the AV 100 cannot share physical space. In an embodiment, some or all of the objects 1008a-b are static objects (e.g., an object that does not change position such as a street lamp or utility pole) or dynamic objects (e.g., an object that is capable of changing position such as a pedestrian or other car).

The nodes 1006a-d are connected by edges 1010a-c. If two nodes 1006a-b are connected by an edge 1010a, it is possible for an AV 100 to travel between one node 1006a and the other node 1006b, e.g., without having to travel to an intermediate node before arriving at the other node 1006b. (When we refer to an AV 100 traveling between nodes, we mean that the AV 100 travels between the two physical positions represented by the respective nodes.) The edges 1010a-c are often bidirectional, in the sense that an AV 100 travels from a first node to a second node, or from the second node to the first node. In an embodiment, edges 1010a-c are unidirectional, in the sense that an AV 100 can travel from a first node to a second node, however the AV 100 cannot travel from the second node to the first node. Edges 1010a-c are unidirectional when they represent, for example, one-way streets, individual lanes of a street, road, or highway, or other features that can only be traversed in one direction due to legal or physical constraints.

In an embodiment, the planning module 404 uses the directed graph 1000 to identify a path 1012 made up of nodes and edges between the start point 1002 and end point 1004.

An edge 1010a-c has an associated cost 1014a-b. The cost 1014a-b is a value that represents the resources that will be expended if the AV 100 chooses that edge. A typical resource is time. For example, if one edge 1010a represents a physical distance that is twice that as another edge 1010b, then the associated cost 1014a of the first edge 1010a may be twice the associated cost 1014b of the second edge 1010b. Other factors that affect time include expected traffic, number of intersections, speed limit, etc. Another typical resource is fuel economy. Two edges 1010a-b may represent the same physical distance, but one edge 1010a may require more fuel than another edge 1010b, e.g., because of road conditions, expected weather, etc.

When the planning module 404 identifies a path 1012 between the start point 1002 and end point 1004, the planning module 404 typically chooses a path optimized for cost, e.g., the path that has the least total cost when the individual costs of the edges are added together.

### Autonomous Vehicle Control

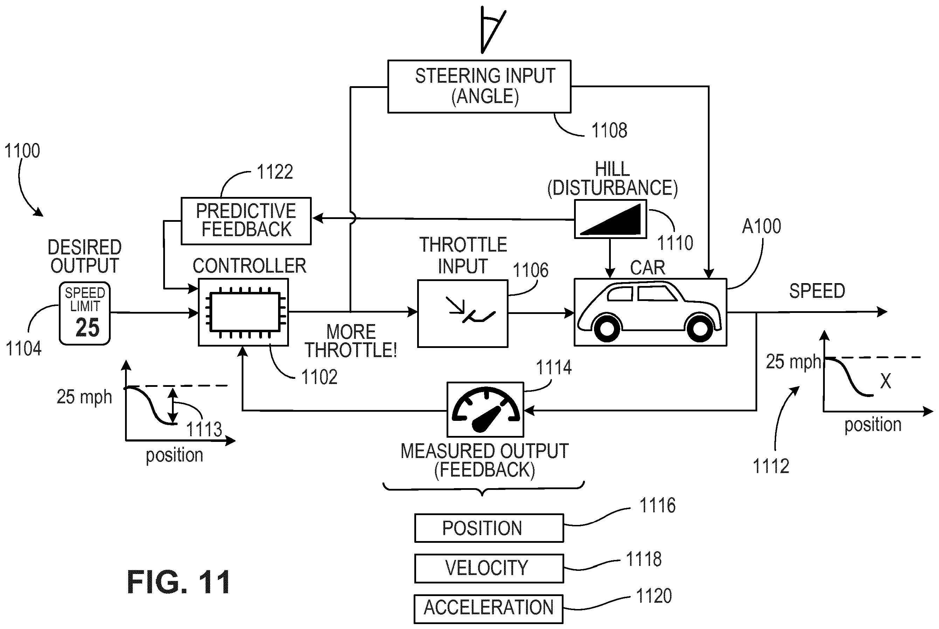

FIG. 11 shows a block diagram 1100 of the inputs and outputs of a control module 406 (e.g., as shown in FIG. 4). A control module operates in accordance with a controller 1102 which includes, for example, one or more processors (e.g., one or more computer processors such as microprocessors or microcontrollers or both) similar to processor 304, short-term and/or long-term data storage (e.g., memory random-access memory or flash memory or both) similar to main memory 306, ROM 1308, and storage device 210, and instructions stored in memory that carry out operations of the controller 1102 when the instructions are executed (e.g., by the one or more processors).

In an embodiment, the controller 1102 receives data representing a desired output 1104. The desired output 1104 typically includes a velocity, e.g., a speed and a heading. The desired output 1104 can be based on, for example, data received from a planning module 404 (e.g., as shown in FIG. 4). In accordance with the desired output 1104, the controller 1102 produces data usable as a throttle input 1106 and a steering input 1108. The throttle input 1106 represents the magnitude in which to engage the throttle (e.g., acceleration control) of an AV 100, e.g., by engaging the steering pedal, or engaging another throttle control, to achieve the desired output 1104. In some examples, the throttle input 1106 also includes data usable to engage the brake (e.g., deceleration control) of the AV 100. The steering input 1108 represents a steering angle, e.g., the angle at which the steering control (e.g., steering wheel, steering angle actuator, or other functionality for controlling steering angle) of the AV should be positioned to achieve the desired output 1104.

In an embodiment, the controller 1102 receives feedback that is used in adjusting the inputs provided to the throttle and steering. For example, if the AV 100 encounters a disturbance 1110, such as a hill, the measured speed 1112 of the AV 100 is lowered below the desired output speed. In an embodiment, any measured output 1114 is provided to the controller 1102 so that the necessary adjustments are performed, e.g., based on the differential 1113 between the measured speed and desired output. The measured output 1114 includes measured position 1116, measured velocity 1118, (including speed and heading), measured acceleration 1120, and other outputs measurable by sensors of the AV 100.

In an embodiment, information about the disturbance 1110 is detected in advance, e.g., by a sensor such as a camera or LiDAR sensor, and provided to a predictive feedback module 1122. The predictive feedback module 1122 then provides information to the controller 1102 that the controller 1102 can use to adjust accordingly. For example, if the sensors of the AV 100 detect ("see") a hill, this information can be used by the controller 1102 to prepare to engage the throttle at the appropriate time to avoid significant deceleration.

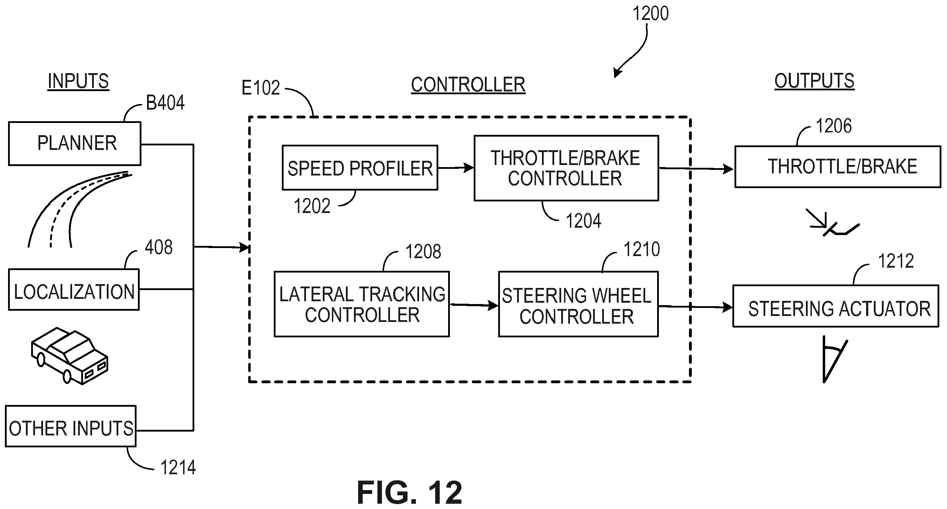

FIG. 12 shows a block diagram 1200 of the inputs, outputs, and components of the controller 1102. The controller 1102 has a speed profiler 1202 which affects the operation of a throttle/brake controller 1204. For example, the speed profiler 1202 instructs the throttle/brake controller 1204 to engage acceleration or engage deceleration using the throttle/brake 1206 depending on, e.g., feedback received by the controller 1102 and processed by the speed profiler 1202.

The controller 1102 also has a lateral tracking controller 1208 which affects the operation of a steering controller 1210. For example, the lateral tracking controller 1208 instructs the steering controller 1204 to adjust the position of the steering angle actuator 1212 depending on, e.g., feedback received by the controller 1102 and processed by the lateral tracking controller 1208.

The controller 1102 receives several inputs used to determine how to control the throttle/brake 1206 and steering angle actuator 1212. A planning module 404 provides information used by the controller 1102, for example, to choose a heading when the AV 100 begins operation and to determine which road segment to traverse when the AV 100 reaches an intersection. A localization module 408 provides information to the controller 1102 describing the current location of the AV 100, for example, so that the controller 1102 can determine if the AV 100 is at a location expected based on the manner in which the throttle/brake 1206 and steering angle actuator 1212 are being controlled. In an embodiment, the controller 1102 receives information from other inputs 1214, e.g., information received from databases, computer networks, etc.

### Sharing Classified Objects Perceived By AVs

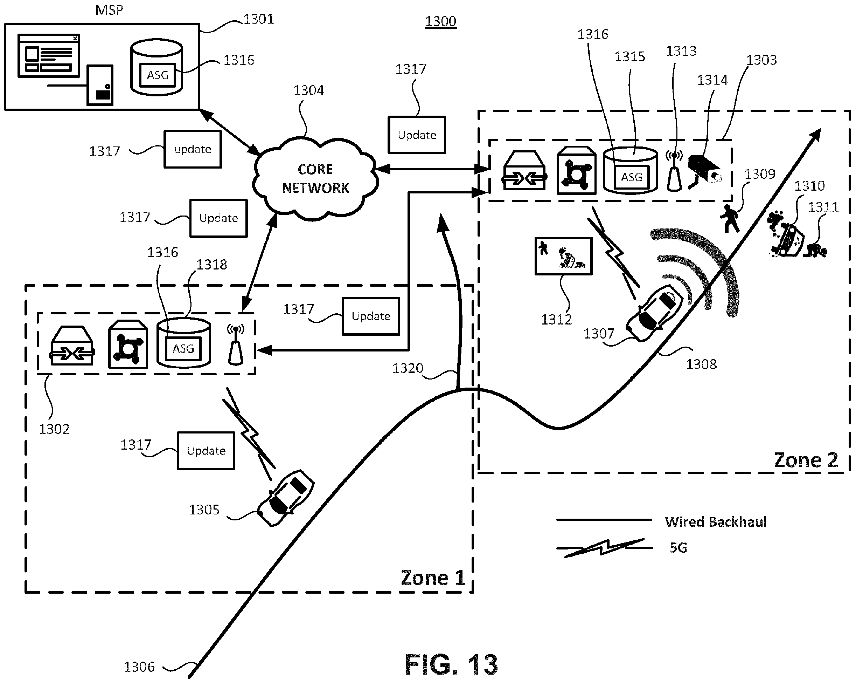

FIG. 13 shows an example network 1300 for sharing classified objects perceived by AVs. In an embodiment, a virtual grid is overlaid on a geographic area (e.g., a city), dividing the area into zones, wherein each zone comprises one or more cells. The zones can have the same number of cells or different numbers of cells. Cells can be any desired size or shape, such as n x n squares, m x n rectangles, circles with radius r or any other desired polygon. In the example shown, network 1300 is a portion of a multi-access edge computing (MEC) network that services two zones in a geographic area: Zone 1 and Zone 2. Network 1300 includes MSP 1301 coupled to edge nodes 1302, 1303 through core network 1304. Edge nodes 1302, 1303 are coupled to MSP 1301 and to each other through wired backhauls (e.g., fiber, Ethernet). In an alternative environment, the backhauls are wireless backhauls or a mix of wired and wireless backhauls. Core network 1304 is a "distributed backbone" network that uses routers, switches and hubs to interconnect various portions of network 1300, and provide a path for the exchange of information between different local area networks (LANS), wireless LANS (WLANS) or subnetworks. Core network 1304 implements network and data link layer technologies, including for example, asynchronous transfer mode (ATM), Internet Protocol (IP), synchronous optical networking (SONET) and gigabit Ethernet technology.

Network 1300 allows cloud computing capabilities and an information technology (IT) service environment at the edge of a cellular network or any other network. Network 1300 runs AV applications and performs related AV processing tasks closer to the locations of AVs to reduce network congestion and to improve the performance of the AV applications. In an embodiment, network 1300 is implemented at cellular base stations or other edge devices, and enables flexible and rapid deployment of new AV applications and services for AVs. Network 1300 also allows cellular operators to open their radio access network (RAN) to authorized thirdparties, such as application developers and content providers to deliver content to AVs through edge nodes 1302, 1303.

Edge nodes 1302, 1303 can include one or more computer processors and other hardware, including but not limited to: wireless transceivers and data storage devices for receiving and transmitting messages wirelessly to AVs and other edge nodes in zones 1 and 2, and edge nodes in other zones in network 1300 not shown in FIG. 13. Edge nodes 1302, 1303 are configured to connect wirelessly and/or through wired connections to MSP 1301 for receiving software/firmware updates, security information and other data from MSP 1301, and for sending data to MSP 1301. In an embodiment, edge nodes 1302, 1303 operate autonomously and/or are controlled by MSP 1301. In another embodiment, edge nodes 1302, 1303 are controlled or managed by a master edge node in a "master-slave" configuration. In an embodiment, edge nodes 1302, 1303 are coupled to one or more sensors (e.g., camera, radar, sonar, LiDAR) for detecting and identifying objects in the local environment. Edge nodes 1302, 1303 communicate using any known wireless communications technology/protocol (e.g., 2G, 3G, 4G, 5G, WiFi, Bluetooth, DSRC, Near Field, satellite internet, etc.).

In an embodiment, edge nodes 1302, 1303 are implemented in edge devices housed in secured physical structures (e.g., utility boxes) to protect hardware from the environment, tampering and vandalism. The physical structures can be roadside units, attached to buildings (e.g., government buildings), utility poles or towers (e.g., cell towers, street lights, telephone poles), billboards, bridges, bus or train stations, traffic signals and any other fixed physical structure. Edge nodes 1302, 1303 can be AVs or other vehicles.

In the example shown, a geographic area (e.g., a city) is divided into Zones 1 and 2, as shown by the dashed lines. Zone 1 includes edge node 1302 and AV 1305 traveling on road segment 1306. Zone 2 includes edge node 1303 and AV 1307 traveling on road segment 1308. AV 1307 comes upon a traffic accident on road segment 1308. Sensors onboard AV 1307 detect and classify three objects 1309 (pedestrian), 1310 (parked vehicle) and 1311 (pedestrian). Additionally, one or more sensors 1314 (e.g., cameras, LiDAR, RADAR) in Zone 2 and coupled to edge node 1303 capture images of the traffic accident. A perception module/circuit (e.g., perception module 402 shown in FIG. 4) onboard AV 1307 generates scene description 1312 that includes objects 1309, 1310 and 1311, and transmits scene description 1312 to edge node 1303 over a wireless communication link (e.g., 5G).

Edge node 1303 uses scene description to update ASG 1316 stored in storage device 1315. As previously stated, at any given time ASG 1316 is the most accurate, complete and upto-date object map for Zone 2. ASG 1316 is stored in an encrypted form in storage device 1315 and is broadcast to AVs operating within its communication range (e.g., AV 1307) using wireless access point 1313 (e.g., a wireless transceiver). Edge node 1303 receives scene descriptions from any (or authorized) AV within communication range of edge node 1303. Edge node 1303 also generates its own scene description using images captured by one or more sensors 1314. In an embodiment, edge node 1303 may also receive ASG updates 1317 from MSP 1301. In an embodiment, edge node 1303 only accepts scene descriptions from authenticated AVs, and performs an authentication with each AV before accepting scene descriptions. In an embodiment, only AVs from a specific fleet can contribute their scene description to the ASG.

Edge node 1303 performs one or more validation tests on each scene description it receives to identify any outlier scene descriptions. In an embodiment, edge node 1303 applies an outlier detection algorithm on the scene descriptions. Examples of outlier detection algorithms include but are not limited to: Z-Score or Extreme Value Analysis (parametric), Probabilistic and Statistical Modeling (parametric), Linear Regression Models (PCA, LMS), Proximity Based Models (non-parametric), Information Theory Models and High Dimensional Outlier Detection Methods (high dimensional sparse data). Any detected outlier screen descriptions are discarded and not used to update ASG 1316. The remaining scene descriptions are used by edge node 1303 to update ASG 1316. In an embodiment, the timestamps for the scene descriptions and/or timestamps for objects in the scene descriptions, determine whether a particular scene description will be excluded for updating ASG 1316. In an embodiment, scene descriptions that have timestamps that exceed an age threshold are excluded from updating ASG 1316. For scene descriptions where each object in the scene description is associated with a timestamp, the oldest object timestamp is designated the timestamp of the scene description.

Updating ASG 1316 includes but is not limited to: adding objects, deleting objects, updating the location of moving objects, updating the speed, velocity, acceleration or heading of the objects and updating labels for the objects to more accurately describe the objects. ASG 1316 is also timestamped before it is broadcast from edge node 1303. In an embodiment, ASG 1316 is assigned a confidence score indicating its accuracy, such as a number from 1 to 5, where 5 is highly accurate and 1 means low accuracy. The confidence score can be generated using any suitable algorithm or technique and use any available information that indicates accuracy. For example, the confidence score can be computed by a function that includes a sum of weighted factors that impact accuracy. The weights (e.g., a number between 0 and 1) can be fixed or adaptive based on new information made available to the edge node, such that the factors that have the greatest impact receive higher weights than the other factors.

After ASG 1316 is updated, access to ASG 1316 is made available to autonomous vehicles traveling the zone or that plan to travel through the zone. ASG 1316 can be transmitted through any edge nodes in network 1300 to any AVs using any suitable wireless communications technology (e.g., 5G), or through other communication channels, such as cell towers, wireless local area networks (e.g., WiFi) and V2V or V2I communications. In an embodiment, AVs are allowed to directly access to ASG 1316 stored in storage device 1313 (e.g., a databases, shared memory) using a uniform resource identifier (URI) or universal resource locator (URL) provided by edge node 1303, another edge node in network 1300 or MSP 1301. ASG 1316 can be compressed using any suitable lossy or lossless compression algorithm and encrypted and digitally signed by edge server 1303 to ensure ASG 1316 is not intentionally or accidentally corrupted. In an embodiment, ASG 1316 is provided to AVs in a common or standardized data and/or communication signaling format that is known to every AV to ensure compatibility across different fleets of AVs.

Upon receipt of ASG 1316, a perception module-circuit operating on the AV can compare ASG 1316 to its sensor based scene description to improve the accuracy of its sensor based scene description. This accuracy improvement is achieved by including previously undetected objects into the AV's most current scene description, objects that were mislabeled, and corrections to states of dynamic objects, such as corrections to the position, speed, acceleration or heading of an object.

AVs can also use ASG 1316 for route planning to avoid traffic situations or temporary environmental impacts (e.g., construction zones, road closures, traffic jams, traffic accidents), such as occurred in Zone 2 in the present example. For example, AV 1305 traveling on road segment 1306 can receive ASG update 1317 directly from edge node 1303 and/or MSP 1301 through a high-speed wired backhaul. The perception module-circuit or planning module-circuit operating in AV 1305 can use ASG update 1317 to update its own locally stored ASG 1316 or to update its planned route. For example, the perception module-circuit can compare its locally stored scene description with ASG 1316 determine if there are any discrepancies between the two. The perception module-circuit can then determine whether to update its locally generated scene description with data from ASG update 1317 based on the confidence score included with the ASG update 1317, and the confidence it has in its own locally generated scene description. The planning module-circuit can use ASG update 1317 to plan a new route on road segment 1320 to avoid the traffic accident on route 1308 indicated by ASG update 1317.

In an embodiment, all edge nodes in network 1300 communicate with each either directly through a wired or wireless communications link, or through MSP 1301. The edge nodes share with each other their respective ASG for their zones. In this manner, each edge node stores the ASG for all other nodes in network 1300. When an AV first enters into a geographic area covered by network 1300, the first edge node encountered will receive the planned route of the AV through the geographic area (e.g., a city), which can be sent over a wireless link (e.g., 5G). Using the planned route, the edge node can select and send to the AV the ASGs for all the zones which contain at least a portion of the planned route for the AV. Using the ASGs from the edge node, the AV can plan a new route to avoid delays through the geographic area. Additionally, having the ASGs stored in the AV allows for delta updates from each edge node along the planned route when the AV is within communication range of the edge node. A delta update includes only the changed portions of the ASG stored at the edge node rather than the entire ASG. This allows for faster data transport due to less data being transmitted over the wireless link.

### Example Mobility Services Platform (MSP)

FIG. 14 shows a block diagram of an example MSP 1301 for facilitating shared objects perceived by AVs. In an embodiment, MSP 1301 is a distributed computing platform that includes a data stream processing pipeline architecture for processing real-time data feeds using a scalable publication/subscription message queue as a distributed transaction log. In some exemplary embodiments, MSP 1301 includes message bus 1401, message engine 1402 and database(s) 1410. In some exemplary embodiments, MSP 1301 optionally includes transformation engine 1403. In some exemplary embodiments, MSP 1301 optionally includes operation engine 1404. In some exemplary embodiments, MSP 1301 optionally includes intelligence engine 1405. In some exemplary embodiments, MSP 1301 optionally includes analytic engine 1406. In an embodiment, one or more of engines 1402-1406 are each an instance of a software method that runs on one or more servers of MSP 1301. These software instances are configured to communicate with each other using message bus 1401. Multiple instances of engines 1402-1406 can run concurrently. Engines 1402-1406 provide OTA services (e.g., software updates, client connectivity, remote control and operation monitoring), and data services (e.g., data ingestion, data storage/management, data analytics, real-time processing and data retrieving control).

In an embodiment, a load balancer (not shown) running on one or more servers manages connection requests from mobility clients 1400 (e.g., AV 100) by listening on one or more ports connected to mobility clients 1400 to access OTA services. The load balancer forwards requests to a backend server that has at least one instance of message engine 1402 running. In an embodiment, the load balancer maintains persistence (server affinity) to ensure that connections and subsequent requests from mobility clients 1400 are sent to the same server after a service interruption (e.g., due to a lost connection). Messages sent by mobility clients 1400 can be formatted in any known data-interchange format, such as Extensible Markup Language (XML) or Java^{®} Script Object Notation (JSON).

In an embodiment, message bus 1401 is implemented by a distributed streaming platform. The distributed streaming platform publishes and subscribes to streams of messages (also referred to as "records"), stores the streams of messages in database(s) 1407 and provides a real-time streaming data pipeline that can transfer the streams of messages between engines 1402-1406. An example message bus 1401 is the Apache Kafka^{®} distributed streaming platform. In an embodiment, consumers of messages can subscribe to a particular "topic" to retrieve messages from message bus 1401 for that topic. A topic is a category or feed name to which messages are published. The topics are multi-subscriber and can have zero, one, or many consumers that subscribe to the data written to the topic. Raw input data is consumed from topics and then aggregated, enriched, or otherwise transformed into new topics for further consumption or follow-up processing by other consumers of MSP 1301.

In an embodiment, data structure 1408 is created for mobility clients 1400 and stored in one or more databases 1407. Data structure 1408 is a cloud-based virtual representation of a mobility client. Data structure 1408 can be used for monitoring, diagnostics and prognostics to optimize performance and utilization of mobility clients 1400. Sensor data can be combined with historical data, human expertise and fleet and simulation learning to improve the outcome of prognostics. MSP 1301 uses digital twins of mobility clients 1400 to discover the root cause of issues related to OTA operations and to resolve those issues. Each instance of each engine 1402-1406 can create a copy of data structure 1408 for a particular mobility client, and read or write data to any field 1408b-1408f in data structure 1408. A copy of data structure 1408 for every mobility client 1400 can be stored on a plurality of distributed databases. A background process implemented by MSP 101 can maintain coherency between different copies of data structure 1408 stored on distributed databases.

In an embodiment, data structure 1408 includes a number of fields for exchanging data between mobility clients 1400 and MSP 1301. In the example shown, the fields include but are not limited to: Mobility Client ID field 1408a, State Flow/Status field 1408b, Update Info field 1408c, Control Info field 1408d, Data Info field 1408e and Extended Data field(s) 1408f. These fields are exemplary and other embodiments of data structure 1408 can have more or fewer fields.

Mobility Client ID 1408a can be a Universally Unique Identifier (UUID) that uniquely identifies a mobility client. In an embodiment, Mobility Client ID 1408a stores a Vehicle Identification Number (VIN) that can be used to uniquely identify a mobility client. State Flow/Status field 1408b includes state and session-specific information for persistence (server affinity). Update Info field 1408c includes information associated with a particular software update, such as a download information file provided by intelligence engine 1405. Control Info field 1408d includes commands for remote control of an OTA client, such as a disable command to disable a particular software version installed on the mobility client. For inbound messages, Data Info field 1408e includes the name of the mobility client, a timestamp and a link to a software package for the mobility client that is stored in in a software package repository. For outbound messages, the Data Info field 1408e is used to send data and commands to the mobility client.

Extended Data field(s) 1408f are used to send and receive data or services. Extending Data fields 1408f can include links to data or service providers (e.g., URIs, URLs, pointer) or an application programming interface (API). For example, if a mobility client requests a service or data that is hosted by a third party data or service provider external to the MSP, then Extended Data field(s) 1408f can provide an interface to the data or service and the MSP will handle the necessary connections to the third party server computers to request and receive results generated by the third party server computers. In this manner, each mobility client will have a digital twin with a number of customized Extended data filed(s) 1408f based on the particular services or applications subscribed to by the mobility client. For example, if mobility client 1400 wants to subscribe to a traffic or weather service, access to the traffic or weather service is provided through the Extended Data field(s) 1408f. The services can be hosted on third party server computers (e.g., hosted by server farm) or by MSP server computers. The services that can be subscribed to include any service that is available through any mobile application accessible by, for example, a smartphone. This feature is advantageous because it allows integration of mobile applications that the user is already subscribed to on their smartphone or tablet computer to be available in their vehicle through, for example, an entertainment system or vehicle computer.

In an embodiment, third party software can be hosted on servers of MSP 1301 and Extended Data field(s) 1408f provide access to the services through an API or other interface mechanism. In an embodiment, user profile data can be sent to MSP 101 in Extended Data field(s) 1408f. Personal profile information can be any data related to the personal preferences of an operator of the mobility client, including but not limited to: climate control data, seat and mirror adjustment data, entertainment preference data (e.g., radio presets, music playlists), telephone contact lists, navigation data (e.g., history data, destination locations) and any other data that is personalized to a particular operator of mobility client 1400.

In an embodiment, Extended Data field(s) 1408f can include multiple personal profiles. For example, each member of a family who shares the mobility client can have their own personal profile. Also, if the mobility client is part of a fleet of mobility clients (e.g., taxis, rental cars, company vehicles), then personal profiles for each operator can be stored in database(s) 1407.

In another embodiment, extended data fields(s) 1408f can be used for a Mobile Device Management (MDM) service. For example, MDM data downloaded onto the mobility client can allow or restrict employees from using certain features, including imposing and enforcing policies on the mobility client, such as policies to optimize mobility client usage and secure data. For example, MDM data can configure a mobility client to report mobility client data to MSP 101 where it can be further analyzed. Mobility client data can include but is not limited to: location data (e.g., timestamp, latitude, longitude, and altitude), sensor data (e.g., acceleration data, gyroscope data) and environment data (e.g., temperature data). In an embodiment, the location data can be used to determine if a mobility client has entered or exited a geofence (a virtual geographic boundary) to trigger a download of a software package or perform some other location-based service.

In an embodiment, geofence crossings can be used to determine if a corporate policy has been violated. For example, drivers for a taxi service may be prohibited from traveling within or outside a certain geographic region enclosed by a geofence. If the mobility client is a self-driving vehicle, then Extended Data fields(s) 1408f can include mobility client data specific to self-driving vehicles, such as LiDAR, ultrasonic sensors, radar, GNSS, stereo camera and map data. In an embodiment, the mobile client data can be used by analytic engine 1406 to detect and predict various maintenance problems with mobility clients 1400.

After the load balancer (not shown) receives a message from mobility client 1400, the load balancer sends the message to a MSP server that is running an instance of message engine 1402. Message engine 1402 provides an end-point to communicate with one or more mobility clients 1400 and supports both inbound and outbound message processing. The number of message engines 1401 that are concurrently running is based on the number of active connections with mobility clients 1400. In an embodiment, the load balancer and/or message engine 1402 implements one or more protocols for communicating with mobility clients 1400, including but not limited to: Transmission Control Protocol/Internet Protocol (TCP/IP), Hypertext Transfer Protocol (HTTP), Hypertext Transfer Protocol Secure (HTTPS), Message Queue Telemetry Transport (MQTT) protocol and Open Mobile Alliance Device Management (OMA-DM) protocol.

In an embodiment, message engine 1402 reads the message header and performs version authentication. An integration Application Programming Interface (API) allows third party applications to communicate with message engine 1402 over a network (e.g., the Internet). For example, the SOTA service may be unavailable, or the software update may be too large to transfer using the SOTA service. In such cases, the integration API may be used by an application running on a personal computer or mobile device to upload or deliver a software package to a personal computer over a network. After the package is downloaded to the personal computer it can be transferred to a Universal Serial Bus (USB) thumb drive. For example, a technician in a repair shop or dealership can download a software package from MSP 1301 to a personal computer, transfer the package to a thumb drive, and then connect the thumb drive directly to a port of a vehicle computer to transfer the software package to the vehicle.

Transformation engine 1402 reads the message body and transforms the message body into a common message data format used by message bus 1401 (e.g., the Kafka^{®} streaming format).

Operation engine 1404 supports data operations, software operations and system issue management. Operation engine 1404 provides a Web portal and mobile user interface (UIs) to communicate with system clients (e.g., OEMs, software developers). Operation engine 1404 generates reports with visualizations (e.g., charts, tables), which can be viewed on the Web portal and/or mobile UIs, and sends notifications/alerts to system clients using various modes of communication (e.g., email, push notification, text message). Operation engine 1404 also provides a service API that allows system clients to access mobility services using their proprietary applications. In an embodiment, the service API supports a payment system that manages billing-based software updates using data retrieved through the service API.

Intelligence engine 1405 supports various OTA operations, including software packaging, software dependency checking, scheduling and monitoring.

Analytic engine 1406 supports business intelligence, including report generation and alert detection. Analytic engine 1406 also provides an Interactive Development Environment (IDE) that includes a dashboard and workflow canvass that allows a data analyst to build, test and deploy distributed workflows using real-time message streams or a database as a data source.

In an embodiment, database(s) 1410 include(s) a relational database (e.g., SQL database) and a distributed NoSQL database (e.g., Apache Cassandra^{™} DBMS with Elasticsearch^{™} service) for storing messages, data logs, software packages, operation history and other data. The data stored can be either structured or unstructured. In an embodiment, engines 1402-1406 can communicate with database(s) 1410 over data access layer (DAL) 1409 using, for example, the Java^{®} EE data access object (DAO).

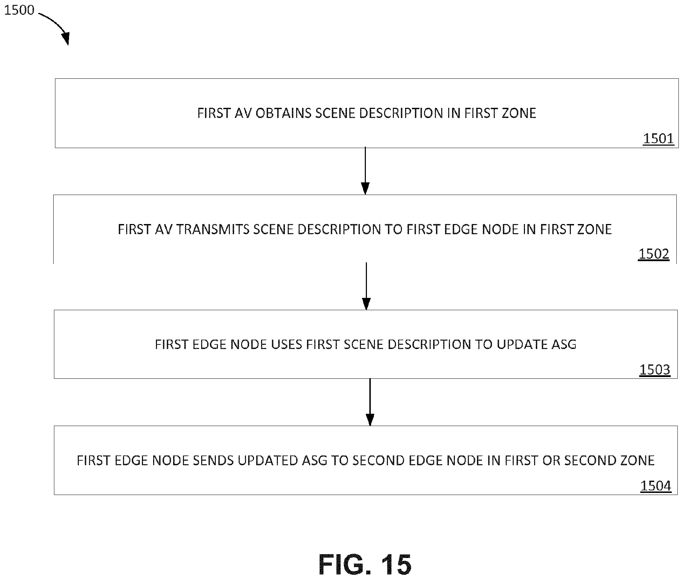

FIG. 15 shows an example flow diagram of a process 1500 for sharing classified objects perceived by A Vs.

Process 1500 begins when a first AV obtains a scene description (1501). The scene description includes one or more objects detected in a first zone including a first portion a geographic area (e.g., a city or region) by the first AV using one or more sensors (e.g., LiDAR, RADAR, camera system).

Process 1500 continues when the first AV transmits the scene description to a first edge node in the first zone (1502). The scene description can be transmitted to the first edge node over a wireless communication link using any suitable wireless technology or protocol (e.g., 5G).

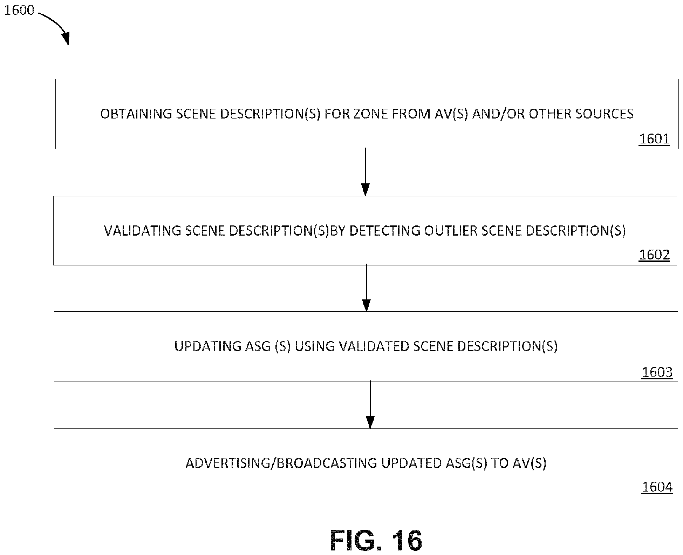

Process 1500 continues when the first edge node uses the scene description to update an ASG for the first zone stored at the first edge node (1503). For example, the first edge node performs the ASG update process described in reference to FIG. 16.

Process 1500 continues when the first edge node sends the updated ASG to a second edge node located in the first zone or a second zone including a second portion of the geographic area (1504). For example, the first edge node can send the updated ASG to the second node through a direct communication link or through a cloud based computing platform, such as MSP 1301, described in reference to FIG. 14.

In an embodiment, the updated ASG is transmitted from the second edge node to a second AV over a wireless communication link using any suitable wireless technology or protocol (e.g., 5G). The second AV updates its locally generated scene description using the updated ASG. For example, the second AV updates its most current scene description by adding or deleting objects, adding or changing labels for objects and/or updating object state information for dynamic objects (e.g., position coordinates, speed, velocity, acceleration, compass heading). The perception module-circuit of the second AV may look at the age of the ASG (e.g., the timestamp) or a confidence score (e.g., computed by the first edge node and sent with the updated ASG to the second edge node) before updating its locally generated AV.

After the second AV updates its locally generated scene description with the updated ASG sent by the first edge node, the second AV performs an action based on the updated scene description. For example, the second AV can perform a maneuver to avoid a newly added object, plan a new route to avoid an object, traffic jam or traffic accident, or perform any other desired action or maneuver.

FIG. 16 shows an example flow diagram of a process 1600 performed by an edge node to share classified objects perceived by AVs.

Process 16 begins when an edge node or MSP obtains scene descriptions from AVs and other sources for a zone (1601). For example, the scene descriptions can be obtained through a wireless communication link from AVs traveling a road segment in the zone, from fixed sensors wired or wirelessly coupled to edge node (e.g., cameras, LiDAR, RADAR) or to any other infrastructure in the zone (e.g., buildings), from MSP 1301 (see FIG. 14) or from other AVs using V2V communications, such as dedicated short-range communications (DSRC).

Process 1600 continues by validating the scene descriptions by detecting and discarding outlier scene descriptions (1602). For example, various outlier algorithms can be used to detect outlier scene descriptions, as described in reference to FIG. 13.

Process 1600 continues by updating a locally stored ASG using the validated scene descriptions (1603). Updating ASG 1316 includes but is not limited to: adding objects, deleting objects, updating the location of moving objects, updating the speed, velocity, acceleration or heading of the objects and updating labels for the objects to more accurately describe the objects. ASG 1316 is also timestamped before it is broadcast from edge node 1303. In an embodiment, ASG 1316 is assigned a confidence score indicating its accuracy, such as a number from 1 to 5, where 5 is highly accurate and 1 means low accuracy. The confidence score can be generated using any suitable algorithm or technique and use any available information that indicates accuracy. For example, the confidence score can be computed by a function that includes a sum of weighted factors that impact accuracy. The weights (e.g., a number between 0 and 1) can be fixed or adaptive based on new information made available to the edge node, such that the factors that have the greatest impact receive higher weights than the other factors.

Process 1600 continues by providing access to the updated ASG to AVs in communication range of the edge node (1604). Providing access includes at least one of transmitting the updated ASG to the AVs, allowing the AVs to access the ASG in shared memory in an edge node storage device or providing a resource locator (e.g., URI, URL) that can be used by the AVs to retrieve the updated ASG from the edge node or other network storage device. In an embodiment, the edge node can advertise that it has an updated ASG available using an advertising channel/transmission, such as a Bluetooth Low Energy (BLE) beacon advertising channel/transmission.

In the foregoing description, embodiments of the invention have been described with reference to numerous specific details that may vary from implementation to implementation. The description and drawings are, accordingly, to be regarded in an illustrative rather than a restrictive sense. The sole and exclusive indicator of the scope of the invention, and what is intended by the applicants to be the scope of the invention, is the scope of the appended set of claims. Any definitions expressly set forth herein for terms contained in such claims shall govern the meaning of such terms as used in the claims. In addition, when we use the term "further comprising," in the foregoing description or following claims, what follows this phrase can be an additional step or entity, or a sub-step/sub-entity of a previously-recited step or entity.

## Claims

1. A computer-implemented method for providing access to an autonomous system grid, ASG (1316), the method being performed by one or more special-purpose computing devices, the method comprising:
obtaining (1601), by a first edge node (1303), from an autonomous vehicle, AV (1307), a first scene description (1312), the first scene description including one or more classified objects (1309, 1310, 1311) detected in a first zone of a geographic area;
generating, by the first edge node, an own scene description using images captured by one or more sensors (1314) coupled to the first edge node;
updating (1503, 1603), by the first edge node in the first zone and using a plurality of scene descriptions, the ASG for the first zone, wherein the ASG includes a scene description for the first zone of the geographic area, the scene description being based on one or more of: locally generated scene descriptions provided by autonomous vehicles traveling in the first zone, scene descriptions provided by fixed sensors located at edge nodes or infrastructure in the first zone, and scene descriptions provided by cloud-based resources, the plurality of scene descriptions including the first scene description and the own scene description;
sending (1504), by the first edge node, the updated ASG to a second edge node (1302) located in the first zone or a second zone of the geographic area; and
providing, by the first edge node, access to the updated ASG to one or more AVs traveling in the first zone or planning to travel in the first zone.

2. The method of claim 1, further comprising:
detecting (1602), by the first edge node (1303), one or more outlier scene descriptions in the plurality of scene descriptions; and
excluding the one or more outlier scene descriptions from the updating (1503, 1603).

3. The method of claim 1, further comprising:
determining, by the first edge node (1303), whether a timestamp of the first scene description (1312) exceeds an age threshold; and
in accordance with the timestamp exceeding the age threshold,
excluding the first scene description from the updating (1503, 1603).

4. The method of claim 3, wherein the timestamp of the first scene description (1312) is an oldest object timestamp for an object in the first scene description.

5. The method of claim 1, further comprising:
generating, by the first edge node (1303), a second scene description generated from data provided by one or more non-AV sensors in the first zone; and
using, by the first edge node, the first and second scene descriptions in the updating (1503, 1603).

6. The method of claim 1, further comprising:
determining, by the first edge node (1303), a confidence score indicating an accuracy of the ASG (1316).

7. The method of claim 1, further comprising:
obtaining, by the first edge node (1303), one or more ASG updates from a cloud based computer platform; and
using, by the first edge node, the one or more ASG updates in the updating (1503, 1603).

8. The method of claim 1, wherein the updating (1503, 1603) includes adding or deleting one or more objects to or from the ASG (1316).

9. The method of claim 1, wherein updating (1503, 1603) includes adding or changing labels for one or more objects of the ASG (1316).

10. The method of claim 1, wherein updating (1503, 1603) includes updating at least one state of at least one dynamic object in the ASG (1316).

11. The method of any one of claims 1 to 10, wherein providing, by the first edge node, access to the updated ASG to one or more AVs traveling in the first zone or planning to travel in the first zone is configured to allow the one or more AVs to compare the ASG to a respective sensor-based scene description to improve the accuracy of the respective scene description.

12. The method of claim 11, wherein improving the accuracy of the respective scene description includes one or more of: including previously undetected objects into the respective scene description, re-labeling of objects that were mislabeled, and correcting one or more states of dynamic objects, optionally wherein the one or more states include one or more of: a position, a speed, an acceleration, and a heading of a respective object.

13. The method of any one of claims 1 to 12, further comprising:
storing, by the first edge node, the updated ASG in a core network.

14. The method of any one of claims 1 to 13, wherein providing, by the first edge node, access to the updated ASG to one or more AVs traveling in the first zone or planning to travel in the first zone comprises broadcasting, by the first edge node, the updated ASG to the one or more AVs.

15. A system comprising:
a core network;
a plurality of edge nodes (1302, 1303) coupled to the core network, a first edge node (1303) of the plurality of edge nodes including one or more computer processors programmed to perform the method of any one of claims 1 to 14.

## Patentansprüche

1. Computerimplementiertes Verfahren zum Bereitstellen eines Zugriffs auf ein autonomes Systemnetz, ASG (1316), wobei das Verfahren durch eine oder mehrere Spezialrechenvorrichtungen ausgeführt wird, wobei das Verfahren Folgendes umfasst:
Erhalten (1601), durch einen ersten Randknoten (1303), von einem autonomen Fahrzeug, AV (1307), einer ersten Szenenbeschreibung (1312), wobei die erste Szenenbeschreibung ein oder mehrere klassifizierte Objekte (1309, 1310, 1311), die in einem ersten Bereich eines ersten geographischen Gebiets detektiert werden, enthält;
Erzeugen, durch den ersten Randknoten, einer eigenen Szenenbeschreibung unter Verwendung von Bildern, die durch einen oder mehrere Sensoren (1314), die an den ersten Randknoten gekoppelt sind, aufgenommen werden;
Aktualisieren (1503, 1603), durch den ersten Randknoten in dem ersten Bereich und unter Verwendung mehrerer Szenenbeschreibungen, des ASG für den ersten Bereich, wobei das ASG eine Szenenbeschreibung für den ersten Bereich des geografischen Gebiets enthält, wobei die Szenenbeschreibung auf einem oder mehreren des Folgenden beruht: lokal erzeugte Szenenbeschreibungen, die durch autonome Fahrzeuge, die in dem ersten Bereich fahren, bereitgestellt werden, Szenenbeschreibungen, die durch feste Sensoren, die sich an Randknoten oder Infrastruktur in dem ersten Bereich befinden, bereitgestellt werden, und Szenenbeschreibungen, die durch Cloud-basierte Betriebsmittel bereitgestellt werden, wobei die mehreren Szenenbeschreibungen die erste Szenenbeschreibung und die eigene Szenenbeschreibung enthalten;
Senden (1504), durch den ersten Randknoten, des aktualisierten ASG an einen zweiten Randknoten (1302), der sich in dem ersten Bereich oder einem zweiten Bereich des geografischen Gebiets befindet; und
Bereitstellen, durch den ersten Randknoten, eines Zugriffs auf das aktualisierte ASG für ein oder mehrere AV, die in dem ersten Bereich fahren oder planen, in dem ersten Bereich zu fahren.

2. Verfahren nach Anspruch 1, das ferner Folgendes umfasst:
Detektieren (1602), durch den ersten Randknoten (1303) einer oder mehrerer Ausreißerszenenbeschreibungen in den mehreren Szenebeschreibungen; und
Ausschließen der einen oder der mehreren Ausreißerszenenbeschreibungen vom Aktualisieren (1503, 1603) .

3. Verfahren nach Anspruch 1, das ferner Folgendes umfasst:
Bestimmen, durch den ersten Randknoten (1303), ob ein Zeitstempel der ersten Szenenbeschreibung (1312) einen Altersschwellenwert überschreitet; und
in Übereinstimmung damit, dass der Zeitstempel den Altersschwellenwert überschreitet,
Ausschließen der ersten Szenenbeschreibung vom Aktualisieren (1503, 1603).

4. Verfahren nach Anspruch 3, wobei der Zeitstempel der ersten Szenenbeschreibung (1312) ein Zeitstempel eines ältesten Objekts für ein Objekt in der ersten Szenenbeschreibung ist.

5. Verfahren nach Anspruch 1, das ferner Folgendes umfasst:
Erzeugen, durch den ersten Randknoten (1303), einer zweiten Szenenbeschreibung, die aus Daten erzeugt wird, die durch einen oder mehrere Nicht-AV-Sensoren in dem ersten Bereich bereitgestellt werden; und
Verwenden, durch den ersten Randknoten, der ersten und der zweiten Szenenbeschreibung beim Aktualisieren (1503, 1603).

6. Verfahren nach Anspruch 1, das ferner Folgendes umfasst:
Bestimmen, durch den ersten Randknoten (1303), eines Vertrauenswerts, der eine Genauigkeit des ASG (1316) angibt.

7. Verfahren nach Anspruch 1, das ferner Folgendes umfasst:
Erhalten, durch den ersten Randknoten (1303), einer oder mehrerer ASG-Aktualisierungen von einer Cloudbasierten Computerplattform; und
Verwenden, durch den ersten Randknoten, der einen oder der mehreren ASG-Aktualisierungen bei der Aktualisierung (1503, 1603).

8. Verfahren nach Anspruch 1, wobei das Aktualisieren (1503, 1603) ein Hinzufügen eines oder mehrerer Objekte zu dem ASG oder ein Löschen eines oder mehrerer Objekte aus dem ASG (1316) enthält.

9. Verfahren nach Anspruch 1, wobei das Aktualisieren (1503, 1603) enthält, Etiketten für ein oder mehrere Objekte des ASG (1316) hinzuzufügen oder zu ändern.

10. Verfahren nach Anspruch 1, wobei das Aktualisieren (1503, 1603) enthält, mindestens einen Zustand mindestens eines dynamischen Objekts in dem ASG (1316) zu aktualisieren.

11. Verfahren nach einem der Ansprüche 1 bis 10, wobei das Bereitstellen durch den ersten Randknoten eines Zugriffs auf das aktualisierte ASG für ein oder mehrere AVs, die in dem ersten Bereich fahren oder planen, in dem ersten Bereich zu fahren, ausgelegt ist, dem einen oder den mehreren AVs zu erlauben, das ASG mit einer jeweiligen sensorbasierten Szenenbeschreibung zu vergleichen, um die Genauigkeit der jeweiligen Szenenbeschreibung zu verbessern.

12. Verfahren nach Anspruch 11, wobei das Verbessern der Genauigkeit der jeweiligen Szenebeschreibung eines oder mehrere des Folgenden enthält: Aufnehmen vorher nicht detektierter Objekte in die jeweilige Szenenbeschreibung, Neuetikettieren von Objekten, die falsch etikettiert wurden, und Korrigieren eines oder mehrerer Zustände dynamischer Objekte, wobei wahlweise der eine oder die mehreren Zustände eines oder mehrere des Folgenden enthalten: eine Position, eine Geschwindigkeit, eine Beschleunigung und einen Kurs eines jeweiligen Objekts.

13. Verfahren nach einem der Ansprüche 1 bis 12, das ferner Folgendes umfasst:
Speichern, durch den ersten Randknoten, des aktualisierten ASG in einem Kernnetz.

14. Verfahren nach einem der Ansprüche 1 bis 13, wobei das Bereitstellen durch den ersten Randknoten eines Zugriffs auf das aktualisierte ASG für ein oder mehrere AV, die in dem ersten Bereich fahren oder planen, in dem ersten Bereich zu fahren, umfasst, das aktualisierte ASG durch den ersten Randknoten an das eine oder die mehreren AV zu senden.

15. System, das Folgendes umfasst:
ein Kernnetz;
mehrere Randknoten (1302, 1303), die an das Kernnetz gekoppelt sind, wobei ein erster Randknoten (1303) der mehreren Randknoten einen oder mehrere Computerprozessoren enthält, die programmiert sind, das Verfahren nach einem der Ansprüche 1 bis 14 auszuführen.

## Revendications

1. Procédé, mis en œuvre par ordinateur, de fourniture d'un accès à une grille de système autonome, notée ASG, (1316), le procédé étant réalisé par un ou plusieurs dispositifs informatiques spécialisés, le procédé comprenant :
l'obtention (1601), par un premier nœud de bordure (1303), auprès d'un véhicule autonome, noté AV, (1307), d'une première description de scène (1312), la première description de scène comportant un ou plusieurs objets classifiés (1309, 1310, 1311) détectés dans une première zone d'une région géographique ;
la génération, par le premier nœud de bordure, d'une description de scène propre à l'aide d'images capturées par un ou plusieurs capteurs (1314) couplés au premier nœud de bordure ;
la mise à jour (1503, 1603), par le premier nœud de bordure dans la première zone et à l'aide d'une pluralité de descriptions de scène, de l'ASG pour la première zone, l'ASG comportant une description de scène pour la première zone de la région géographique, la description de scène étant basée sur : des descriptions de scène générées localement fournies par des véhicules autonomes se déplaçant dans la première zone et/ou des descriptions de scène fournies par des capteurs fixes situés au niveau de nœuds de bordure ou d'une infrastructure dans la première zone et/ou des descriptions de scène fournies par des ressources dans le cloud, la pluralité de descriptions de scène comportant la première description de scène et la description de scène propre ;
l'envoi (1504), par le premier nœud de bordure, de l'ASG mise à jour à un deuxième nœud de bordure (1302) situé dans la première zone ou une deuxième zone de la région géographique ; et
la fourniture, par le premier nœud de bordure, à un ou plusieurs AV se déplaçant dans la première zone ou projetant de se déplacer dans la première zone, d'un accès à l'ASG mise à jour.

2. Procédé selon la revendication 1, comprenant en outre :
la détection (1602), par le premier nœud de bordure (1303), d'une ou de plusieurs descriptions de scène aberrantes dans la pluralité de descriptions de scène ; et
l'exclusion des une ou plusieurs descriptions de scène aberrantes de la mise à jour (1503, 1603).

3. Procédé selon la revendication 1, comprenant en outre :
la détermination, par le premier nœud de bordure (1303), si une estampille temporelle de la première description de scène (1312) dépasse ou non un seuil d'âge ; et
dans le cas où l'estampille temporelle dépasse le seuil d'âge,
l'exclusion de la première description de scène de la mise à jour (1503, 1603).

4. Procédé selon la revendication 3, dans lequel l'estampille temporelle de la première description de scène (1312) est une estampille temporelle d'objet la plus ancienne pour un objet dans la première description de scène.

5. Procédé selon la revendication 1, comprenant en outre :
la génération, par le premier nœud de bordure (1303), d'une deuxième description de scène générée à partir des données fournies par un ou plusieurs capteurs hors AV dans la première zone ; et
l'utilisation, par le premier nœud de bordure, des première et deuxième descriptions de scène dans la mise à jour (1503, 1603).

6. Procédé selon la revendication 1, comprenant en outre :
la détermination, par le premier nœud de bordure (1303), d'un score de confiance indiquant une précision de l'ASG (1316).

7. Procédé selon la revendication 1, comprenant en outre :
l'obtention, par le premier nœud de bordure (1303), d'une ou de plusieurs mises à jour de l'ASG auprès d'une plateforme informatique dans le cloud ; et
l'utilisation, par le premier nœud de bordure, des une ou plusieurs mises à jour de l'ASG dans la mise à jour (1503, 1603).

8. Procédé selon la revendication 1, dans lequel la mise à jour (1503, 1603) comporte l'ajout ou la suppression d'un ou de plusieurs objets à ou de l'ASG (1316).

9. Procédé selon la revendication 1, dans lequel la mise à jour (1503, 1603) comporte l'ajout ou la modification d'étiquettes pour un ou plusieurs objets de l'ASG (1316).

10. Procédé selon la revendication 1, dans lequel la mise à jour (1503, 1603) comporte la mise à jour d'au moins un état d'au moins un objet dynamique dans l'ASG (1316).

11. Procédé selon l'une quelconque des revendications 1 à 10, dans lequel la fourniture, par le premier nœud de bordure, à un ou plusieurs AV se déplaçant dans la première zone ou projetant de se déplacer dans la première zone, d'un accès à l'ASG mise à jour est configurée pour permettre aux un ou plusieurs AV de comparer l'ASG à une description de scène respective à base de capteurs dans le but d'améliorer la précision de la description de scène respective.

12. Procédé selon la revendication 11, dans lequel l'amélioration de la précision de la description de scène respective comporte : l'incorporation d'objets précédemment non détectés dans la description de scène respective et/ou le réétiquetage d'objets qui étaient mal étiquetés et/ou la correction d'un ou de plusieurs états d'objets dynamiques, éventuellement les un ou plusieurs états comportant : une position et/ou une vitesse et/ou une accélération et/ou un cap d'un objet respectif.

13. Procédé selon l'une quelconque des revendications 1 à 12, comprenant en outre :
le stockage, par le premier nœud de bordure, de l'ASG mise à jour dans un cœur de réseau.

14. Procédé selon l'une quelconque des revendications 1 à 13, dans lequel la fourniture, par le premier nœud de bordure, à un ou plusieurs AV se déplaçant dans la première zone ou projetant de se déplacer dans la première zone, d'un accès à l'ASG mise à jour comprend la diffusion, par le premier nœud de bordure, de l'ASG mise à jour vers les un ou plusieurs AV.

15. Système, comprenant :
un cœur de réseau ;
une pluralité de nœuds de bordure (1302, 1303) couplés au cœur de réseau, un premier nœud de bordure (1303) parmi la pluralité de nœuds de bordure comportant un ou plusieurs processeurs d'ordinateur programmés pour réaliser le procédé selon l'une quelconque des revendications 1 à 14.
